(19) Europäisches Patentamt
European Patent Office
Office européen des brevets

(11) **EP 3 760 673 A1**

(12) **EUROPEAN PATENT APPLICATION**

(43) Date of publication:
**06.01.2021 Bulletin 2021/01**

(51) Int Cl.:
**C08L 23/04** (2006.01)        **C09J 123/06** (2006.01)
**C09J 123/16** (2006.01)        **C09J 123/26** (2006.01)

(21) Application number: **20174506.4**

(22) Date of filing: **01.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2016 US 201662345341 P**
**20.06.2016 US 201662352125 P**

(62) Document number(s) of the earlier application(s) in accordance with Art. 76 EPC:
**17730313.8 / 3 405 522**

(71) Applicant: **MSI Technology LLC**
**Arlington Heights, IL 60004 (US)**

(72) Inventors:
• **PUCCI, Mark S**
**Elk Grove Village, IL Illinois 60007 (US)**

• **WHALEY, Paul D.**
**Inverness, IL Illinois 60010 (US)**
• **OPACICH, Michael Lloyd**
**Lake Zurich, IL Illinois 60047 (US)**

(74) Representative: **Helbig, Christian**
**Wagner + Helbig**
**Patentanwälte**
**Pfarrstrasse 14**
**80538 München (DE)**

Remarks:
This application was filed on 13-05-2020 as a divisional application to the application mentioned under INID code 62.

(54) **ADHESIVE COMPOSITIONS, ARTICLES INCLUDING THE ADHESIVE COMPOSITIONS, AND METHODS THEREOF**

(57)    The teachings herein are directed at multi-layer films, tie layer compositions for multi-layer films and related methods, and to polymeric adhesive compositions and methods for manufacturing polymeric adhesive compositions. The tie layer composition preferably adhere to polypropylene, and more preferably adheres to both polyethylene and polypropylene. The tie layer preferably includes a propylene based elastomer. The tie layer includes one or more thermoplastic polyolefins. The tie layer composition may include a grafted polyolefin, e.g., having one or more functional grafts. The polymeric adhesive compositions preferably adhere to both polypropylene surfaces and to polyethylene surfaces. The polymeric adhesive composition preferably comprises a minority amount (i.e., less than about 40 weight percent) of a propylene based elastomer polymer and a majority amount (i.e., greater than about 55 weight percent) of an ethylene containing polymer. Preferred methods for manufacturing the polymeric adhesive composition avoids thermal processing (e.g., a cycle of heating above the melting temperature and cooling below the crystallization temperature) of at least a portion (or even all) of the ethylene containing polymer after removing from a polymerization reactor and before compounding with the propylene based elastomer.

FIG. 1

## Description

CLAIM OF PRIORITY

The present patent application claims priority to U.S. Provisional Patent Application 62/345,341 filed on June 3, 2016 and to U.S. Provisional Patent Application 62/352,125, filed on June 20, 2016, the contents of which are each incorporated herein by reference in its entirety.

FIELD

The teachings herein are directed to polymeric adhesive compositions and methods for manufacturing the compositions, to multi-layer films, to tie layer compositions for multi-layer films, and to related methods. The tie layer compositions may provide adhesion to polypropylene, and preferably to both polyethylene and polypropylene. The tie layer preferably includes a propylene based elastomer, such as described herein. The polymeric adhesive composition preferably includes a minority amount (i.e., less than about 40 weight percent) of a propylene based elastomer polymer and a majority amount (i.e., greater than about 55 weight percent) of an ethylene containing polymer. The polymeric adhesive compositions preferably adhere to both polypropylene surfaces and to polyethylene surfaces. Various of the polymeric adhesive compositions may also adhere to polar substrates (e.g., polar polymeric substrates, such as EVOH and polyamide). The polymeric adhesive compositions preferably are suitable for use in multi-layered films for packaging. Preferred methods for manufacturing the polymeric adhesive compositions avoid thermal processing (e.g., a cycle of heating above the melting temperature and cooling below the crystallization temperature) of the ethylene containing polymer after removing from a polymerization reactor and before compounding with the propylene based elastomer.

BACKGROUND

In polymer film applications, there is often a need for polymer layers having different chemical composition. The different layers may provide different functions for the film. For example, a layer may function as a structural layer, a barrier layer (e.g., a barrier to oxygen, water, or carbon dioxide), a layer of a peelable material, a chemical resistant layer, a printable layer, a protective surface layer. When adjacent layers are of dissimilar chemical structure, it may be necessary to employ a tie layer between the two layers to provide adhesion between the dissimilar layers. Often, it is necessary for the tie layer to be tailored or selected to adhere to both of the dissimilar layers. For example, a tie layer for adhering an EVOH barrier layer to a polypropylene layer may employ a tie layer including a polypropylene grafted with maleic anhydride. However, such a tie layer would not provide sufficient adhesion for adhering the EVOH barrier layer to a polyethylene layer. Thus, in a structure having both a EVOH barrier layer interposed between a polypropylene layer and a polyethylene layer (e.g., skin layers), it is typically necessary to employ two different tie layers to provide strong adhesion. There is a need for a single tie layer and methods for manufacturing a polymeric adhesive composition for such a tie layer that provides good adhesion between a barrier layer material and both polypropylene and polyethylene.

There also is a difficulty in adhering layers of polyethylene (e.g., having a crystalline structure characteristic of high density polyethylene) and polypropylene (e.g., having a crystalline structure characteristic of isotactic polypropylene). Although both polyolefins, they are sufficiently dissimilar in chemical structure that their crystalline structures are different and they do not co-crystallize. Instead, polyethylenes and polypropylenes typically phase separate under equilibrium conditions. The difference in chemical structure and in crystalline structure between polypropylene and polyethylene result in weaknesses in their interfaces, such as described in R. McEvoy et al., Macromolecules, 1996, 29(12), pp. 4258-4266. The use of a polyethylene copolymer for improving the mechanical properties is described in E. Nolley et al, Polymer Engineering & Science, 1980, 20(5), pp. 364-369). Thus, there is also a need for a polymeric adhesive composition and methods for manufacturing of a polymeric adhesive composition for use as a tie layer to enable the manufacture of multi-layered films having structures that include a polyethylene layer attached to a polypropylene layer. For example, there is a need to be able to manufacture a multi-layered film having a polypropylene layer and a polyethylene layer which are joined by a single tie layer that includes or consists essentially of polyolefin resins. For example, there is a need for a tie layer for adhering to both polyethylene and polypropylene that is free of grafted polymer.

In the manufacture of film, there is often the need to change between a polypropylene layer and a polyethylene layer in order to produce different films using the same equipment. For films having a barrier layer, this typically also requires changing the tie layer material. As the tie layer thickness is typically less than the thickness of the polypropylene or polyethylene layer, the changeover time for the tie layer is typically higher than for the other layers. Such changeover times may be long, resulting in reduced productivity and / or the generation of large quantities of scrap material. As such, it would be advantageous to have a single tie layer material that adheres to both polypropylene and polyethylene.

There is also a need for methods for manufacturing of the improved polymeric adhesive compositions. For example, there is a need for a method that has one or more of the following features: is efficient (e.g., in energy, time, or material), low cost, or reduces or minimizes the exposure of one or more components to thermal history.

There is a need for methods for preparing polymeric adhesive compositions that are suitable for thin film applications.

Tie layers often contain polymers having a generally high modulus. Although such high modulus may provide for some structural properties of the film (e.g., for contributing to the overall flexural modulus or stiffness of the film), it has been determined that other methods for providing the stiffness of the film may allow for more design flexibility to enable optimization of the tie layer for improved adhesion properties.

One approach for an adhesive composition for adhering to a polypropylene substrate and to an EVOH or polyamide is to employ a polypropylene resin and a polypropylene grafted with maleic anhydride. However, such grafted polypropylenes are typically low in molecular weight due to chain scission during grafting or require additional components to increase the molecular viscosity. Thus, there is a need for a polymeric adhesive composition for adhering to a polypropylene substrate which avoids the need for a maleic anhydride grafted polypropylene.

Examples of adhesive compositions including a grafted polyolefin having a polar functionality is described in US Patent Number 7,064,163 B2, incorporated herein by reference in its entirety. However, the compositions do not include a polypropylene based elastomer and there is no teaching of a need for a single composition that adheres to both polypropylene and polyethylene substrates.

Other examples of adhesive compositions are described in U.S. Patent Numbers 7,700,702 B2 (published on April 20, 2010), 8,071,687 B2 (published on December 6, 2011), and 8,637,159 B2 (published on January 28, 2014), and U.S. Patent Application Publications 2004/0249046 A1 (published on December 9, 2004), 2010/0276057 A1 (published on November 4, 2010), and 2011/0217497 A1 (published on September 8, 2011), each incorporated herein by reference in its entirety.

As an example, in food packaging film, there has been a trend towards multi-layer film including a barrier layer (such as nylon or EVOH) between two polyolefin layers. Tie layers may be used to adhere the polyolefin layers to the barrier layers. A common tie layer for adhering polypropylene to a barrier layer comprises polypropylene grafted with function groups which will chemically bond with the polymer of the barrier layer. For example, the tie layer comprises polypropylene having grafts of maleic anhydride. However, the process of making maleic anhydride grafted polypropylene is difficult and expensive. The polypropylene typically undergoes chain scission during the grafting process which reduces the molecular weight of the grafted polypropylene. The reduction in molecular weight may result in reduced adhesion performance of the grafted polypropylene. The resulting grafted polymer generally does not meet the low extractables requirements of the food industry. In many packaging applications, including food packaging applications, the grafted polypropylene does not meet one or more requirements of adhesion performance, optical performance (e.g., high film clarity) and extractables performance. Tie layers including polyethylene grafted with functional groups (e.g., maleic anhydride) have also been used in the food packaging industry. However, these tie layers generally do not adhere sufficiently to polypropylene layers. Attempts to add polypropylene to the composition of the tie layer typically results in a week tie layer due to the incompatibility between polyethylene and polypropylene. Grafted polyethylene can be manufactured using a variety of feedstock resins. During the grafting process, the properties of the feedstock resin (e.g., the molecular weight) may be generally maintained. As such, the feedstock polyethylene resin may be selected to achieve a grafted polymer having desired performance properties (e.g., high clarity and/or low extractables). Although these grafted polymers give good adhesion to polyethylene substrates, they generally do not adhere to polypropylene substrates. Therefore, it would be advantageous to have a tie layer including grafted polyethylene that is strong and adheres to polypropylene.

Some food packaging film requires a barrier layer between a polypropylene layer and a polyethylene layer. Such a film typically requires a first tie layer between the polypropylene layer and the barrier layer and a second tie layer between the polyethylene layer and the barrier layer. Here the two tie layers are typically different. A first tie layer including a polypropylene and/or a maleic anhydride grafted polypropylene is typically used between the polypropylene and the barrier layer. A different tie layer including a polyethylene and/or a maleic anhydride grafted polyethylene is used between the polyethylene layer and the barrier layer. Therefore, the process equipment requires separate extruders for the two barrier layers. However, some manufacturing equipment is designed for providing only a single barrier material for both tie layers. There is thus a need for a single tie layer material that adheres the polypropylene layer to the barrier layer and also adheres the polyethylene layer to the barrier layer.

In the manufacture of film, there is often the need to change between a polypropylene layer and a polyethylene layer in order to produce different films using the same equipment. For films having a barrier layer, this typically also requires changing the tie layer material. As the tie layer thickness is typically less than the thickness of the polypropylene or polyethylene layer, the changeover time for the tie layer is typically higher than for the other layers. Such changeover times may be long, resulting in reduced productivity and / or the generation of large quantities of scrap material. As such, it would be advantageous to have a single tie layer material that adheres to both polypropylene and polyethylene.

Although chemically similar, the difference in chemical structure and in crystalline structure between polypropylene and polyethylene result in weaknesses in their interfaces, such as described in R. McEvoy et al., Macromolecules, 1996, 29(12), pp. 4258-4266. The use of a polyethylene copolymer for improving the mechanical properties is described in E. Nolley et al, Polymer Engineering & Science, 1980, 20(5), pp. 364-369).

There is also a need to be able to manufacture multi-layered films having new structures that include a polyethylene layer and a polypropylene layer. For example, there is a need to be able to manufacture a multi-layered film having a polypropylene layer and a polyethylene layer which are joined by a single tie layer that includes or consists essentially of polyolefin resins. For example, there is also a need for a single tie layer material that will adhere directly to both a polyethylene layer and a polypropylene layer. For example, there is a need for a tie layer for adhering to both polyethylene and polypropylene that is free of grafted polymer.

There is also a need for improved process for changing polyolefin layers while manufacturing multi-layered films. There is also a need for a polymeric composition that can be employed as an adhesive for different polyolefins. There is also a need for a tie layer for films having layers of different polyolefins. For example, there is a need for a tie layer for adhering film layers of polyethylene and polypropylene. There is also a need for an adhesive for interposing between a barrier layer and a polyolefin layer, where the polyolefin layer may be changed to a different polyolefin without changing the adhesive composition of the tie layer. One or more of these needs may be satisfied according to the teachings herein.

SUMMARY

One or more of the above needs are achieved by the methods, structures, adhesives, and compositions according to the teachings herein.

One objective of the teachings herein is to provide a polymeric adhesive composition having improved adhesion to polyethylene, polypropylene, or both. Another objective of the teachings herein is to provide a polymeric adhesive composition that adheres to polyethylene, polypropylene, and a barrier layer material (e.g., EVOH or nylon). Another objective of the teachings herein is to provide a polymeric adhesive composition that adheres to both a polypropylene layer and a barrier layer (e.g., EVOH or nylon) that substantially or entirely avoids the need for a grafted polypropylene polymer. The polymeric adhesive composition preferably has one or more of the following features relative to a grafted polypropylene polymer: a high optical clarity, reduced color, increased weight average molecular weight, reduced extraction, or higher modulus. Another objective of the teachings herein is to provide a polymeric adhesive composition having improved balance of adhesion to polyethylene, polypropylene, and barrier layer materials. Another objective of the teachings herein is a film including a polymeric adhesive layer that adheres to both a polypropylene layer and to a polyethylene layer. A further objective of the teachings herein is to provide a polymeric adhesive composition for a tie layer that allows for the transition from a structure including a first polymer layer to a structure where the first polymer layer is switched (e.g., from polyethylene to polypropylene, or from polypropylene to polyethylene) without changing the tie layer (e.g., while maintaining good mechanical performance). Another objective of the teachings herein is to provide a method of manufacturing a polymer adhesive composition.

One aspect of the teachings herein is directed at a polymeric composition (e.g., a polymeric adhesive composition) comprising a grafted polyolefin; a propylene based elastomer; one or more polyethylene resins; and optionally one or more polypropylene resins having a crystallinity of about 30 percent or more. The amount of the grafted polyolefin preferably is about 0.1 to about 20 weight percent, based on the total weight of the polymeric composition. The amount of the propylene based elastomer preferably is from about 5 to about 50 weight percent, based on the total weight of the polymeric composition. The amount of the one or more polyethylene resins preferably is from about 40 to about 90 weight percent, based on the total weight of the polymeric composition. The amount of the one or more polypropylene resins is preferably up to about 35 weight percent, based on the total weight of the polymeric composition. The grafted polyolefin preferably has a polyolefin backbone including about 60 weight percent or more ethylene (more preferably about 80 weight percent or more ethylene), based on the total weight of the polyolefin backbone, and a functional graft including one or more oxygen atoms. The grafted polyolefin preferably includes or consists of one or more functional groups grafted onto a polyethylene homopolymer consisting entirely of ethylene or onto a polyethylene copolymer including less than 100 weight percent ethylene. The propylene based elastomer preferably has a propylene concentration of about 75 weight percent or more, and a crystallinity of up to about 25 percent. The functional graft preferably is present in an amount from about 0.02 to about 1.2 weight percent based on the total weight of the polymeric composition. The total amount of the grafted polyolefin, the propylene based elastomer (i.e., propylene elastomer), the polyethylene resins, and the polypropylene resins preferably is from about 95 to about 100 weight percent, based on the total weight of the polymeric composition.

This aspect of the teachings may be characterized by one or any combination of the following features: the polymeric composition has a melt flow rate from about 0.5 to about 10 g/10 min as measured according to ISO 1133 at about 190 °C/2.16 kg; the polyethylene resins includes a linear low density polyethylene; the linear low density polyethylene includes ethylene and one or more olefinic comonomers selected from the group consisting of 1-butene, 1-hexene, and 1-octene; the total amount of the ethylene and the one or more olefinic comonomers in the linear low density polyethylene is from about 95 percent to about 100 percent by weight; the polymeric composition is substantially or entirely free of filler; the amount of filler is about 5 weight percent or less, based on the total weight of the polymeric composition; the total amount of polymer in the polymeric composition is about 95 weight percent or more, about 98 weight percent or more, about 99 weight percent or more, or about 100 weight percent; the polymeric composition includes at least 5 weight percent of the one or more propylene resins; the propylene based elastomer has a propylene concentration of about 95 weight percent or less; the polymeric composition includes from about 0.1 weight percent to about 5 weight percent of one or more additives; the functional graft includes maleic anhydride, maleic acid, or both; the grafted polyolefin has a melt flow rate from about 0.5 to about 20 g/10 min (preferably from about 0.5 to about 5 g/10 min) as measured according to ISO 1133 at 190 °C /. 2.16 kg; the grafted polyolefin has a crystallinity (e.g., with a crystalline structure characteristic of polyethylene crystals) from about 10 weight percent to about 80 weight percent (preferably from about 25 to about 75 percent as measured) by differential scanning calorimetry; or the propylene based elastomer is a random copolymer having a crystallinity (with a crystalline structure characteristic of polypropylene crystals) from about 2 percent to about 25 percent (preferably from about 4 percent to about 15 percent).

Another aspect of the teachings is directed at a film comprising: a first layer including about 60 weight percent or more of one or more polyethylene resins; a second layer including about 60 polymeric weight percent or more of one or more polypropylene resins; and a tie layer between and in direct contact with the first layer and the second layer. Preferably the tie layer includes about 40 weight percent or more of a polyethylene and 10 weight percent or more of a propylene based elastomer having a crystallinity from about 2 percent to about 25 percent. The film preferably has i) a total thickness of about 2000 μm or less (e.g., about 1800 μm or less, about 1200 μm or less, about 800 μm or less, about 200 μm or less or about 50 μm or less), ii) a tie layer having a thickness of about 20 percent or less of the total thickness, or iii) both i) and ii).

This aspect of the teachings may be further characterized by one or any combination of the features discussed herein with respect to the polymeric composition. This aspect of the invention may be further characterized by one or any combination of the following: the first layer consists entirely of one or more polyethylene resins; the second layer consists entirely of one or more polypropylene resins; the polyethylene resin is a low density polyethylene, a linear low density polyethylene, a high density polyethylene, or copolymer of ethylene and a polar comonomer (e.g., an ethylene vinyl acetate copolymer, preferably having an ethylene concentration of about 70 weight percent to about 95 weight percent); the propylene based elastomer has a propylene concentration of about 80 to about 94 weight percent, based on the total weight of the propylene based elastomer; the tie layer is substantially free of, or entirely free of any grafted polymer; the second layer includes, consists substantially of, or consists entirely of one or more isotactic polypropylene homopolymers, one or more random polypropylene copolymers having a crystallinity of about 30 percent or more, or one or more impact polypropylene copolymers; the tie layer includes a polypropylene homopolymer, one or more random polypropylene copolymers having a crystallinity of about 30 percent or more, or a polypropylene impact copolymer; the tie layer consists entirely of the polyethylene and the propylene based elastomer; or the tie layer consists entirely of the polypropylene, the propylene based elastomer, and the polyethylene.

Another aspect of the teachings is directed at a film comprising: a first olefinic polymer layer including one or more polyolefin hompolymers or copolymers; a second olefinic polymer layer including about 60 weight percent or more of one or more polypropylene resins; a barrier layer interposed between the first and second olefinic polymer layers; a first tie layer interposed between the first olefinic polymer layer and the barrier layer; a second tie layer interposed between and in direct contact with the second olefinic polymer layer and the barrier layer. The tie layer preferably is formed of a polymeric composition according to the teachings herein.

This aspect of the teachings may be further characterized by one or any combination of the features discussed herein with respect to the polymeric composition. This aspect of the teachings may be further characterized by one or any combination of the following: the first olefinic polymer layer includes about 60 weight percent or more of one or more polyethylene resins; the first olefinic polymer layer includes about 60 weight percent or more of one or more polypropylene resins; the first tie layer is in direct contact with the first olefinic polymer layer; the first tie layer is in direct contact with the barrier layer; the first tie layer and the second tie layer include the same polymeric composition; the first and second olefinic polymer layers are formed from the same polymers; any adhesion failure between the first olefinic polymer layer and the barrier layer is at the boundary of the first tie layer and the barrier layer; the adhesive strength between the second olefinic polymer layer and the barrier layer is greater than the adhesive strength between the second olefinic polymer and a barrier layer where the grafted polyethylene in the second tie layer is replaced with a grafted polypropylene; any adhesion failure between the second olefinic polymer layer and the barrier layer is a cohesive failure or is at the boundary of the second tie layer and the barrier layer, or is a cohesive failure; the film is clear; or the film has a thickness of about 50 μm or less.

Another aspect of the teachings is directed at a tie layer between and in direct contact with the first layer and the second layer, wherein the tie layer includes about 40 weight percent or more of a polyethylene and 10 weight percent or more of a propylene based elastomer having a crystallinity from about 2 percent to about 25 percent; wherein the film has a total thickness of about 2000 μm or less (e.g., about 1200 μm or less, or about 800 μm or less), and the thickness of the tie layer is about 20 percent or less of the total thickness.

Another aspect of the teachings herein is directed at a film including a layer of a polymeric composition according to the teachings herein.

Another aspect of the teachings herein is directed at a process for manufacturing multi-layer films comprising the steps of: extruding on a film line a first film including a first polyolefin layer adhered to a barrier layer using a tie layer (e.g., a tie layer including a polymeric composition according to the teachings herein) and extruding a second film on the same film line using a second polyolefin different from the first polyolefin, the second polyolefin being adhered to a barrier layer using the same tie layer, wherein the first polyolefin is a polypropylene resin (e.g., having a crystalline structure characteristic of polypropylene) or a polyethylene resin (e.g., having a crystalline structure characteristic of polyethylene), and the second polyolefin is the other resin.

One process related aspect of the teachings herein is directed at a process comprising the steps of: polymerizing one or more monomers including ethylene in a reactor to form a reaction product including an ethylene-containing polymer having a peak melting temperature; introducing the ethylene-containing polymer into a device for melting and blending the ethylene-containing polymer; introducing a propylene based elastomer into the device; introducing a grafted polyolefin into the device; and melt blending at least the ethylene-containing polymer, the propylene based elastomer, and the grafted polyolefin in the device to form a blend composition. The ethylene-containing polymer preferably is first heated to a temperature above the peak melting temperature in the device during the step of melt blending.

Another process related aspect of the teachings herein is directed at a process comprising the steps of polymerizing one or more monomers including ethylene in a reactor to form a reaction product including an ethylene-containing polymer having a peak melting temperature; removing the ethylene-containing polymer from the reactor at a temperature below the peak melting temperature, wherein at least a portion of the ethylene-containing polymer is in a crystalline state; introducing the ethylene-containing polymer into a device for at least heating the ethylene-containing polymer; adding a propylene based elastomer into the device; adding a grafted polyolefin into the device; removing a blend composition including the ethylene-containing polymer, the propylene based elastomer, and the grafted polyolefin from the device; and crystallizing at least a portion of the ethylene-containing polymer in the blend composition. Preferably, the first crystallization of the portion of the ethylene-containing polymer after being removed from the reactor is the crystallization of the portion in the blend composition.

Another process related aspect of the present teachings is directed at a process comprising the steps of melt compounding a plurality of polymers including an ethylene-containing polymer; a propylene based elastomer; and a grafted polyolefin; to form a blend composition; and forming the blend composition into pellets or other particles of suitable size for introducing into a screw and barrel assembly of a polymer extruder. Preferably the ethylene-containing polymer, the propylene based elastomer, and the grafted polyolefin are selected so that the resulting blend composition has a melt flow rate from about 0.5 to about 5 g/10 min as measured according to ISO 1133 at 190 °C / 2.16 kg.

Any of the aspects of the present teachings (e.g., the aspects related to a process for preparing a polymeric composition, or related to the resulting polymeric adhesive composition) may be further characterized by one or any combination of the following features: the ethylene-containing polymer includes from about 60 weight percent to about 100 weight percent (preferably from about 75 weight percent to about 100 weight percent) ethylene, and has a melt flow rate from about 0.1 to about 100 g/10 min (preferably from about 0.5 to about 10 g/10 min) as measured according to ISO 1133 at 190 °C / 2.16 kg; the blend composition includes from about 30 weight percent to about 85 weight percent of the ethylene-containing polymer; the blend composition includes from about 10 weight percent to about 50 weight percent of the propylene based elastomer; the blend composition includes from about 3 weight percent to about 40 weight percent of the grafted polyolefin; the grafted polyolefin includes maleic anhydride or maleic acid grafted on a polyethylene (i.e., a polyethylene homopolymer or a polyethylene copolymer including about 60 weight percent or more ethylene); the grafted polyolefin has a melt flow rate of about 0.2 to about 80 g/10 min as measured according to ISO 1133 at 190 °C / 2.16 kg; the propylene based elastomer has a crystallinity of about 0 percent to about 20 percent; and includes from about 75 to about 95 weight percent propylene; the step of polymerizing the ethylene-containing polymer includes a gas phase polymerization; ethylene monomer is in a gas phase during the polymerization (e.g., using a fluidized bed reactor); the process includes a step of separating the reaction product of a fluidized bed reactor from one or more unreacted monomers including ethylene, wherein the reaction product is in the form of a powder; the process includes polymerizing the ethylene-containing polymer using a catalyst; the catalyst is a Ziegler-Natta catalyst; the catalyst is a metallocene catalyst or a single site catalyst; the device includes a screw and barrel assembly, wherein the screw and barrel assembly provides shear energy to the ethylene-containing polymer and the propylene based elastomer by the rotation of the screw and/or at least a portion of the barrel assembly is heated for providing thermal energy to the ethylene-containing polymer and the propylene based elastomer; the process includes heating the propylene based elastomer and the ethylene-containing polymer to a temperature above the melting temperature of the ethylene-containing polymer and melt mixing in the device for forming the blend composition; the step of heating includes heating to a temperature of about 130 °C or more (preferably about 160 °C or more); the process includes a step of cooling the blend composition to a temperature of about 70 °C or less; the process includes packaging the blend composition and/or shipping the blend composition, wherein the blend composition is in the form of pellets or other particles; the process includes removing a volatile material from the ethylene-containing polymer; the total amount of the ethylene-containing polymer, the propylene based elastomer, and the grafted polyolefin is from about 80 weight percent to about 100 weight percent of the blend composition; the process includes extruding a film including a layer comprising the blend composition; the tie layer is interposed between and in contact with a polyolefin layer and with a barrier layer; the first heating of the ethylene-containing polymer to a temperature of about 20°C or more (preferably about 40 °C or more) above the peak melting temperature of the ethylene-containing polymer is in the melt blending step; the first cooling of the ethylene-containing copolymer from a temperature above the peak melting temperature to a temperature of at least about 20 °C (preferably at least about 40 °C) below the peak melting occurs in the step of cooling; or the process is an in-line process.

Another aspect of the teachings herein is directed at a polymeric adhesive composition (e.g., blend composition) prepared by the methods according to the teachings herein.

Another aspect of the teachings herein is directed at the use of the polymeric adhesive composition (e.g., a blend composition prepared according to the teachings herein) for a multi-layered polymer article, such as a multi-layered film, that includes a layer of the polymeric adhesive composition.

Yet another aspect of the teachings herein is directed at a sealed package including the polymeric adhesive composition (e.g., in the form of pellets or other particles).

BRIEF DESCRIPTION OF THE DRAWINGS

FIG. 1 is a drawing of a cross-section of an illustrative film including a tie layer interposed between a polypropylene layer and a polyethylene layer. It will be appreciated that a film may have additional layers.
FIG. 2 is an expanded view of the film of FIG. 1, identifying surfaces of the layers.
FIG. 3 is a drawing of a cross-section of an illustrative multi-layered film including two or more tie layers.
FIG. 4 is a drawing of a cross-section of an illustrative film including a barrier layer and two tie layers for adhering the barrier layer to two polyolefin layers. It will be appreciated that a film may have additional layers.

FIG. 5 is a drawing of a cross-section of an illustrative film including a barrier layer and two tie layers for adhering the barrier layer to two different polyolefin layers. It will be appreciated that a film may have additional layers.
FIG. 6 is a drawing illustrating some of the features of a film (including only some of the layers of the film) including a polyolefin layer in part A and including a different polyolefin layer in part B. It will be appreciated that a film may have additional layers.
FIG. 7 is an illustrative drawing showing features of manufacturing steps that may be employed in a method according to the teachings herein.
FIG. 8 is an illustrative drawing showing features of manufacturing steps that may be employed in a method according to the teachings herein
FIG. 9 is an illustrative drawing showing features of manufacturing steps that may be employed in a method according to the teachings herein
FIG. 10A is an illustrative drawing showing features of manufacturing steps that may be employed in a method according to the teachings herein
FIG. 10B is an illustrative drawing showing features of manufacturing steps that may be employed in a method according to the teachings herein
FIG. 11 is an illustrative graph showing the adhesion of various tie layers between a polypropylene copolymer layer and a high density polyethylene (i.e., HDPE) layer.
FIG. 12 is an illustrative graph showing the adhesion of various tie layers between a barrier layer and a polypropylene homopolymer layer.

DETAILED DESCRIPTION

One objective of the teachings herein is to provide polymeric adhesive compositions and methods for manufacturing of polymeric adhesive compositions having adhesion to polyethylene or polypropylene. Preferably, the polymeric adhesive composition has adhesion to both polyethylene and polypropylene. Another objective of the teachings herein is to provide a polymeric adhesive composition and manufacturing methods for a polymeric adhesive composition that adheres to both polyethylene and polypropylene and also adheres to a barrier layer material (e.g., ethylene vinyl alcohol copolymer (EVOH), nylon, or both). The polymeric adhesive composition preferably includes a propylene based elastomer and an ethylene-containing polymer. The method of manufacturing the polymeric adhesive composition includes a step of melt blending at least the propylene based elastomer and the ethylene-containing polymer. In one preferred aspect, the method includes a step of polymerizing the ethylene-containing polymer on a polymerization line (e.g., including a polymerization reactor and a finishing line) and the melt blending of the propylene based elastomer and the ethylene-containing polymer occurs on the polymerization line, following the polymerizing step. As such, the process may include a step of adding the propylene based elastomer into the polymerization line. The ethylene-containing polymer preferably is in an original post-reactor state when it is introduced into a device for melt blending with the propylene based elastomer. The process preferably includes a step of heating the ethylene-containing polymer preferably to a temperature above a peak melting temperature of the propylene based elastomer and/or above a peak melting temperature of the ethylene-containing polymer during the melt blending step (e.g., in the polymerization line). In a particularly preferred aspect, the step of melt blending includes melt blending the ethylene containing polymer, the propylene based elastomer and a grafted polyolefin. For example, the process may include a step of introducing a grafted polyolefin into the polymerization line. Preferably the grafted polyolefin is a grafted polyethylene, such as a grafted linear low density polyethylene, a grafted high density polyethylene, or a grafted low density polyethylene.

In one aspect, the process includes melt blending a grafted polyolefin, an ethylene-containing polymer, and a propylene based elastomer at a temperature sufficiently high so that the grafted polyolefin, the ethylene-containing polymer, and the propylene based elastomer all melt. The melt blending may be preferred in any blending device that provides sufficient shear for blending the polymers. The shear rate and/or shear energy may be sufficient so that the average domain size of the propylene based elastomer in the resulting blend composition (e.g., as measured by scanning electron microscopy) is about 300 $\mu$m or less, about 100 $\mu$m or less, about 40 $\mu$m or less, or about 10 $\mu$m or less. The propylene based elastomer may be miscible with the ethylene-containing polymer or have an average domain size of about 0.01 $\mu$m or more, or about 0.1 $\mu$m or more.

In one aspect, the polymeric adhesive compositions according to the teachings herein include one or more propylene based elastomers and one or more polyethylene resins. The propylene based elastomer typically is present in an amount sufficient so that the polymeric adhesive composition adheres to polypropylene. The polyethylene resin typically is present in a sufficient amount so that the polymeric adhesive composition adheres to polyethylene.

Grafted Polyolefin

The polymeric adhesive composition according to the teachings herein may additionally include one or more grafted polyolefin. If present, the grafted polyolefin should be present in amount sufficient to provide adhesion to a barrier layer (e.g., a barrier layer including a nylon or an ethylene vinyl alcohol copolymer). The grafted polyolefin may be a homopolymer consisting substantially of a single olefinic monomer (e.g., about 96 weight percent or more, about 98 weight percent or more, about 99 weight percent or more, or about 100 weight percent) having one or more functional grafts, or a copolymer including at least 70 weight percent of a first olefinic monomer, with one or more functional grafts. Preferably the polymer backbone of the grafted polyolefin consists substantially of, or entirely of one or more olefins. For example, the total amount of olefin monomer in the polymer backbone of the grated polyolefin may be about 90 weight percent or more, about 95 weight percent or more, or about 98 weight percent or more. The total amount of olefin monomer in the polymer backbone of the grafted polyolefin may be about 100 weight percent or less. Preferred olefins for the grafted polyolefin include ethylene, propylene, butene, hexene, octene. More preferably the grafted polyolefin includes ethylene (e.g., as a first olefinic monomer) and optionally one or more additional olefin monomers selected from the group consisting of propylene, butene, hexene, and octane. A particularly preferred homopolymer for the backbone of the grafted polyolefin is a polyethylene homopolymer (e.g., a high density polyethylene, or a low density polyethylene). The amount of ethylene in the copolymer preferably is about 60 weight percent or more, more preferably about 70 weight percent or more, even more preferably about 75 weight percent or more, even more preferably about 80 weight percent or more, and most preferably about 84 weight percent or more. The amount of ethylene in the copolymer preferably is about 98 weight percent or less, more preferably about 96 weight percent or less, even more preferably about 94 weight percent or less, and most preferably about 92 weight percent or less. Preferably the copolymer is a random copolymer. One preferred copolymer for the grafted polyolefin is a copolymer including or consisting essentially of ethylene and propylene.

The grafted polyolefin preferably is a semi-crystalline polymer having a peak melting temperature (e.g., as measured by differential scanning calorimetry according to ASTM D3418.03 at a heating rate of about 10 °C/min) of about 50 °C or more, more preferably about 70 °C or more, even more preferably about 90 °C or more, and most preferably about 100 °C or more. The peak melting temperature of the grafted polyolefin may be about 150 °C or less, about 140 °C or less, about 130 °C or less, about 125 °C or less, or about 120 °C or less.

The grafted polyolefin preferably has a crystallinity of about 10 percent or more, more preferably about 15 percent or more, even more preferably about 20 percent or more, and most preferably about 25 percent or more. The grafted polyolefin may have a crystallinity of about 75 percent or less, about 60 percent or less, about 49 percent or less, or about 42 percent or less.

Percent crystallinity herein can be measured by differential scanning calorimetry, according to ASTM D 3418.03 or ISO 11357-3. By way of example, a milligram size sample of polymer is sealed into an aluminum DSC pan. The sample is placed into a DSC cell with a 25 cubic centimeter per minute nitrogen purge and cooled to -100C. A standard thermal history is established for the sample by heating at 10 °C /minute to 225 °C. The sample is then cooled (at 10° C/minute) to -100°C and reheated at 10 °C/minute to 225°C. The observed heat of fusion for the second scan is recorded ($\Delta H_{observed}$). The observed heat of fusion is related to the degree of crystallinity in weight percent based on the weight of the sample by the following equation:

$$\%Crystallinity = \frac{\Delta H_{observed}}{\Delta H_{known}} \times 100,$$

where the value for $\Delta H_{known}$ is a literature reported established reference value for the polymer. For example, heat of fusion for isotactic polypropylene has been reported in B. Wunderlich, Macromolecular Physics, Volume 3, Crystal Melting, Academic Press, New York, 1980, p. 48, is $\Delta H_{known}$ =165 Joules per gram of polypropylene polymer; and the heat of fusion for polyethylene has been reported in F. Rodriguez, Principles of Polymer Systems, 2nd Edition, Hemisphere Publishing Corporation, Washington, 1982, p. 54, is $\Delta H_{known}$ =287 Joules per gram of polyethylene polymer. The value of $\Delta H_{known}$ =165 J/g may be used for polymers containing greater than about 50 mole % propylene monomer and the value of $\Delta H_{known}$ =287 J/g may be used for polymers containing greater than about 50 mole % ethylene monomers.

The grafted polyolefin includes one or more functional grafts grafted to or otherwise attached to the backbone of the polyolefin. The functional graft refers to a molecule including one or more oxygen atoms that is grafted to the olefinic polymer. The functional graft preferably includes a functional group capable of reacting with an alcohol group, with an amine group (e.g., a primary amine, a secondary amine, or a tertiary amine), or both. For example, the functional graft may be capable of covalently bonding with ethylene vinyl alcohol copolymer, or other alcohol containing polymer. The functional graft preferably includes one or more carboxyl groups, one or more anhydride groups, one or more hydroxyl groups, or any combination thereof. More preferably, the functional graft includes a monomer selected from the group consisting of maleic anhydride, maleic acid, tetrahydropthalic acid, anhydride of tetrahydropthalic acid, fumaric acid, 4-methylcylcohex-4-ene-1,2 dicarboxylic acid, an anhydride of 4-methylcylcohex-4-ene-1,2 dicarboxylic acid, nadic anhydride, an alkyl nadic anhydride, an alkyl himic anhydride, himic anhydride, an alkyl norbornene, norbornene, an anhydride of an alkyl norbornene, an anhydride of norbornene, maleo-primaric acid, an anhydride of maleo-primaric acid, a bicyclo octane carboxylic acid, an anhydride of a bicyclo octane carboxylic acid, an alkyl hydronaphthalene dicarboxylic acid, an anhydride of an alkyl hydronapthalene dicarboxylic acid, an oxadiketospiro nonene, a bicyclo heptane dicarboxylic acid, an anhydride of a bicyclo heptane dicarboxylic acid, and any combination thereof. A particularly preferred functional monomer includes, consists essentially of, or consists entirely of maleic anhydride, maleic acid, or both.

The grafted polyolefin should have a sufficient amount of the functional graft so that the polymeric composition can adhere to a polymer layer having alcohol groups and or amine groups. The amount of the functional graft preferably is about 0.01 weight percent or more, even more preferably about 0.02 weight percent or more, even more preferably about 0.04 weight percent or more, and most preferably about 0.10 weight percent or more, based on the total weight of the polymeric adhesive composition. The amount of the functional graft preferably is about 3 weight percent or less, more preferably about 1.5 weight percent or less, even more preferably about 1.2 weight percent or less, and even more preferably about 1.0 weight percent or less, and most preferably about 0.8 weight percent or less, based on the total weight of the polymeric adhesive composition.

The amount of the grafted polyolefin in the polymeric adhesive composition may be about 0.1 weight percent or more, about 1 weight percent or more, about 3 weight percent or more, about 5 weight percent or more or about 7 weight percent or more, based on the total weight of the polymeric adhesive composition. The amount of the grafted polyolefin in the polymeric adhesive composition may be about 28 weight percent or less, about 25 weight percent or less, about 20 weight percent or less, about 18 weight percent or less, about 16 weight percent or less, or about 10 weight percent or less, based on the total weight of the polymeric adhesive composition.

Examples of commercially available grafted polyolefins include PLEXAR 1000 Series anhydride modified EVA and LDPE resins, PLEXAR 2000 Series anhydride modified HDPE resins, PLEXAR 3000 anhydride modified LLDPE resins, PLEXAR 5000 Series anhydride modified polyolefin resins, and PLEXAR 6000 Series anhydride modified polypropylene resins, commercially available from MSI TECHNOLOGY, LLC. These grafted polyolefins have a melt flow rate from about 1 to about 8 g/10 min (measured at 190 °C/ 2.16kg, except for the propylene based resins which are measured at 230 °C/2.16kg).

Propylene based elastomer

The polymeric adhesive composition preferably includes one or more propylene based elastomers including, consisting substantially of, or consisting entirely of propylene and one or more additional olefins. If the amount of propylene in the propylene based elastomer is too low, it may not have sufficient adhesion and/or compatibility with a thermoplastic polypropylene (e.g., a polypropylene resin having a crystallinity of about 30 percent to about 80 percent). The concentration of propylene in the propylene based elastomer preferably is about 70 percent or more, more preferably about 75 percent or more, even more preferably about 80 percent or more, and most preferably about 82 percent or more, based on the total weight of the propylene based elastomer. The propylene based elastomer may have a propylene concentration of about 100 weight percent or less, about 95 weight percent or less, about 90 weight percent or less, or about 93 weight percent or less.

The one or more additional olefins preferably includes one or more α-olefins having from 2 carbon atoms or 4 to 12 carbon atoms. Examples of such α-olefins include ethylene, 1-butene, 1-hexene, and 1-octene. Most preferably, the one or more additional olefins includes, consists substantially of, or consists entirely of ethylene. The total amount of α-olefin (e.g., the total amount of the propylene and ethylene) in the propylene based elastomer preferably is about 95 weight percent or more, more preferably about 98 weight percent or more, and most preferably about 99 weight percent or more, based on the total weigh of the propylene based elastomer. The total amount of α-olefin (e.g., the total amount of propylene and ethylene) in the propylene based elastomer may about 100 weight percent or less.

The low crystallinity of the propylene based elastomer may be achieved by the amount of the comonomer(s), by the random distribution of the comonomer(s) with the propylene monomer, by the tacticity of the propylene sequences, or any combination thereof.

The propylene based elastomer may be substantially amorphous or entirely amorphous. Preferably, the propylene based elastomer has a sufficient amount of crystallinity so that it can be pelletized and/or otherwise handled (e.g., packaged, shipped, introduced into a mixer or extruder, or any combination thereof) as free flowing particles. The crystallinity of the propylene based elastomer may be about 0 percent or more, about 1 percent or more, about 2 percent or more, about 3 percent or more, or about 4 percent or more, as measured by differential scanning calorimetry according to ASTM D 3418.03 or ISO 11357-3. Preferably, the crystallinity of the propylene based elastomer is about 5 percent or more. The crystallinity of the propylene based elastomer preferably is about 25 percent or less, more preferably about 20 percent or less, even more preferably about 15 percent or less, even more preferably about 12 percent or less, even more preferably about 10 percent or less, and most preferably about 8 percent or less.

The propylene based elastomer may have a generally random sequence distribution of the propylene and additional α-olefins along the polymer chain, or the sequence distribution may be deviate from a random distribution. The distribution of the monomer units may be characterized by a B-index, where the B-index is defined by:

$$B = \frac{f(AP+PA)}{2 F_A F_P}$$

where P is propylene, A is the alpha olefin different from propylene, f(AP+PA) = the sum of the AP and PA diad fractions; and $F_A$ and $F_P$ = the mole fraction of the A monomer(s) and propylene in the copolymer, respectively.

The B-index can theoretically range from 0 to 2 with 1 corresponding with a perfectly random distribution of comonomer units. The higher the B-index, the more alternating the comonomer distribution in the copolymer. Typically, a lower B-index corresponds with a more blocky or clustered comonomer distribution in the copolymer. Preferably, the propylene based elastomer has a generally random (e.g., a B-index from about 0.75 to about 1.25) or alternating structure (e.g., a B-index of about 1.25 to about 2.0). The B-index of the propylene based elastomer preferably is about 0.75 or more, more preferably about 1.0 or more, even more preferably about 1.25 or more, even more preferably about 1.5 or more, and most preferably about 1.7 or more. The B-index may be about 2.0 or less, about 1.95 or less, about 1.90 or less, or about 1.85 or less. Preferably, for any propylene based elastomer, not only is the propylene block length relatively short (e.g., compared to a statistically random distribution) for a given percentage of comonomer. but very little, if any, long sequences of 3 or more sequential comonomer insertions are present in the copolymer, unless the comonomer content of the polymer is very high.

The propylene based elastomer preferably has a peak melting temperature (as measured for example by differential scanning calorimetry at a rate of about 10°C/min on a 3 mg sample of the polymer which is first cooled from 230°C to about 0°C at a rate of -10°/min) about 105°C or less, preferably about 100°C or less, more preferably about 90°C or less, and most preferably about 82°C or less (e.g., the peak melting temperature may be about 65°C or less). The peak melting temperature of the propylene based elastomer preferably is about 30 °C or more, and more preferably about 45 °C or more.

The propylene based elastomer may exhibit a Shore A hardness according to ASTM D 2240-05 of at least about 35, preferably at least about 45, more preferably at least about 55, and still more preferably at least about 60. The Shore A hardness may also be about 95 or less, preferably about 90 or less, more preferably about 85 or less, and still more preferably about 80 or less. For example, the hardness (in units of Shore A) of the propylene based elastomer may range from about 35 to about 90, more preferably from about 45 to about 80, and still more preferably from about 55 to about 80.

The propylene based elastomer preferably has a narrow molecular weight distribution as characterized by gel permeation chromatography. Preferably, the polydispersity index (i.e., the ratio of the weight average molecular weight to the number average molecular weight) is about 5 or less, more preferably about 4 or less, even more preferably about 3 or less, even more preferably about 2.2 or less, and most preferably about 1.6 or less. The polydispersity index may be about 1.0 or more, about 1.1 or more, or about 1.4 or more.

Examples of suitable propylene based elastomers include soft thermoplastics containing greater than about 50 wt.% (e.g., greater than 60 wt.%) propylene monomer and greater than about 5 wt.% ethylene monomer and may be characterized by a peak melting temperature from about 35°C to about 130°C (e.g. from about 40°C to about 110°C) as measured by differential scanning calorimetry, and a crystallinity of about 25 percent or less as measured by differential scanning calorimetry. Such elastomers are commercially available from THE DOW CHEMICAL COMPANY under the designation of VERSIFY® (e.g., including 2400, 3000, 3200, 3300, 3401, and 4301) and from EXXONMOBIL CHEMICAL COMPANY under the designation of VISTAMAXX® (e.g., including 3000, 3020FL, 3980FL, 6102, 6102FL, 6202, 6202FL, and 6502).

There is no particular limitation on the method for preparing the propylene based elastomer. A propylene based elastomer may be obtained by copolymerizing propylene and an alpha-olefin having 2 or from 4 to about 20 carbon atoms, preferably ethylene, in a single stage or multiple stage reactor. Polymerization methods include high pressure, slurry, gas, bulk, or solution phase, or a combination thereof. The polymerization process may use a traditional Ziegler-Natta catalyst or a single-site catalyst or a metallocene catalyst. Preferably the propylene based elastomer is prepared by a single-site or a metallocene catalyst. The catalyst used may include one which has a high isospecificity. Polymerization may be carried out by a continuous or batch process and may include use of chain transfer agents, scavengers, or other such additives as deemed applicable.

The propylene based elastomer preferably is present in an amount of about 5 weight percent or more, more preferably about 8 weight percent or more, even more preferably about 14 weight percent or more, and most preferably about 20 weight percent or more, based on the total weight of the polymeric adhesive composition. The propylene based elastomer preferably is present in an amount of about 55 weight percent or less, more preferably about 50 weight percent or less, even more preferably about 45 weight percent or less, and most preferably about 34 weight percent or less, based on the total weight of the polymeric adhesive composition.

The process of manufacturing a polymeric adhesive composition may include a step of melt blending the ethylene-containing polymer with the propylene based elastomer(s).

Polyethylene resin (i.e., Ethylene-containing polymer)

The polymeric adhesive composition may include one or more polyethylene resins. The polyethylene resin (i.e, the ethylene-containing polymer) includes 50 weight percent or more ethylene and optionally one or more additional monomers. The one or more additional monomers preferably includes or consists entirely of one or more α-olefins. Particularly preferred α-olefins include propylene, 1-butene, 1-hexene, and 1-octene. The ethylene-containing polymer preferably is free of any functional grafts, such as a functional grafts described herein with respect to the grafted polyolefin.

The ethylene-containing polymer may include a polyethylene copolymer consisting substantially of or entirely of ethylene and one or more additional α-olefin monomers. The amount of ethylene in the ethylene-containing polymer may be about 55 weight percent or more, about 60 weight percent or more, about 65 weight percent or more, about 70 weight percent or more, about 80 weight percent or more, about 85 weight percent or more, or about 90 weight percent or more. The amount of ethylene in the ethylene-containing polymer may be about 99 weight percent or less, or about 95 weight percent or less. Preferably the total amount of ethylene, and α-olefin comonomers in the ethylene-containing polymer is about 95 weight percent or more, more preferably about 97 weight percent or more, and most preferably about 99 weight percent or more, based on the total weight of the ethylene-containing polymer. The total amount of ethylene, propylene, butene, hexene, and octene in the polyethylene resin may be about 100 weight percent or less. More preferably, the total amount of the ethylene, hexene, octene, and butene in the ethylene-containing polymer is about 95 weight percent or more, about 98 weight percent or more, about 99 weight percent or more, or about 100 weight percent, based on the total weight of the ethylene-containing polymer.

The ethylene-containing polymer may be characterized as having short chain branching (e.g., from the copolymerization with one or more higher alpha olefins) or being essentially or totally free of short chain branching. Ethylene-containing polymers that are polyethylene copolymers (such as described herein) preferably have an average concentration of short chain branches along the polymer backbone (as measured by number short chain branches per 1000 backbone carbon atoms) that is about 1 or more, about 3 or more, about 10 or more, or about 15 or more. The average concentration of short chain branches in the polyethylene copolymer may be about 200 or less, about 100 or less, about 80 or less, or about 50 or less. Preferably the short chain branches have a length of about 15 carbon atoms or less, a length of about 7 carbon atoms or less, or a length of about 5 carbon atoms or less.

The ethylene-containing polymer preferably is a semi-crystalline polymer having a peak melting temperature (e.g., as measured by differential scanning calorimetry according to ASTM D3418.03 at a heating rate of about 10 °C/min) of about 50 °C or more, more preferably about 80 °C or more, even more preferably about 100 °C or more, and most preferably about 110 °C or more. The peak melting temperature of the ethylene-containing polymer may be about 150 °C or less, about 140 °C or less, about 130 °C or less, about 125 °C or less, or about 120 °C or less.

The ethylene-containing polymer preferably has a crystallinity of about 15 percent or more, more preferably about 20 percent or more, even more preferably about 25 percent or more, and most preferably about 30 percent or more. The ethylene-containing polymer may have a crystallinity of about 75 percent or less, about 60 percent or less, about 49 percent or less, or about 42 percent or less.

Examples of ethylene-containing polymer include high density polyethylene (HDPE), low density polyethylene (LDPE), medium density polyethylene (MDPE), linear low density polyethylene (LLDPE) and very low density polyethylene (VLDPE).

Other examples of ethylene-containing polymer which may be employed include copolymers of ethylene and one or more polar comonomers selected from the group consisting of vinyl acetate, methyl acrylate, ethyl acrylate, butyl acrylate, acrylic acid, and methyl methacrylate. The ethylene-containing polymer including a polar comonomer preferably includes about 60 weight percent or more ethylene, more preferably about 70 weight percent or more, and most preferably about 75 weight percent or more. The amount of ethylene may be about 99.9 weight percent or less, about 99 weight percent or less, or about 95 weight percent or less. The amount of the one or more polar comonomers may be about 0.1 weight percent or more, about 1 weight percent or more, about 5 weight percent or more, about 10 weight percent or more, or about 20 weight percent or more.

The amount of the one or more ethylene-containing polymer in the polymeric composition preferably is about 40 weight percent or more, more preferably about 45 weight percent or more, even more preferably about 50 weight percent or more, and most preferably about 55 weight percent or more. The amount of the one or more ethylene-containing polymer in the polymeric composition preferably is about 90 weight percent or less, more preferably about 85 weight percent or less, even more preferably about 80 weight percent or less, and most preferably about 75 weight percent or less.

A particularly preferred linear low density polyethylene is PETROTHENE®GA502024, commercially available from LYONDELLBASSELL.

PETROTHENE® GA502024 linear low density polyethylene is a copolymer including at least 70 weight percent ethylene and a comonomer that is 1-butene. The polyethylene resin has a density of about 0.918 g/cm3 (as measured according to ASTM D1505), a melt flow rate of about 2.0 g/10 min (as measured according to ISO 1133 at 2.16 kg at 190 °C), an elongation at break of about 750% in the machine direction and about 800% in the transverse direction and a tensile strength at break of about 33.8 MPa in the machine direction and about 24.8 MPa in the transverse direction (as measured according to ASTM D882 on film having a thickness of about 38.1 $\mu$m); a secant modulus of about 221 MPa in the machine direction and about 248 MPa in the transverse direction (as measured according to ASTM D638).

The process for preparing the polymeric adhesive composition may be an in-line process including a step of polymerizing the ethylene-containing polymer, and a step of forming a blend composition in a finishing step of a polymerization line.

Polypropylene resin

The polymeric adhesive composition according to the teachings herein may include one or more polypropylene resins. The polypropylene resin may be a homopolymer, or a copolymer. The polypropylene resin typically includes about 60 weight percent or more propylene and optionally one or more additional monomers. The one or more additional monomers preferably include, consist substantially of (e.g. at least 60%, at least 80%, at least 90%, or at least 95% of the total weight of the one or more additional monomers), or consist entirely of one or more $\alpha$-olefins different from propylene. Polypropylene copolymers may have a propylene concentration of about 100 weight percent or less, about 96 weight percent or less, about 94 weight percent or less, about 92 weight percent or less, or about 90 weight percent or less.

Preferred polypropylene resins are semi-crystalline polymers having a crystallinity of 30 percent or more, as measured by differential scanning calorimetry. The polypropylene resin generally has a crystallinity greater than the crystallinity of the propylene based elastomer. The crystallinity of the polypropylene resin preferably is about 35 percent or more, and more preferably about 40 percent or more. The crystallinity of the polypropylene resin may be about 80 percent or less, or about 65 percent or less. The crystallinity of the polypropylene resin preferably is from isotactic polypropylene sequences. The polypropylene resin generally has a peak melting temperature greater than the peak melting temperature of the propylene based elastomer. The polypropylene resin preferably has a peak melting temperature of about 130 °C or more, more preferably about 140 °C or more, even more preferably about 145 °C or more, and most preferably about 150 °C or more, as measured by differential scanning calorimetry. The polypropylene resin may have a peak melting temperature of about 170 °C or less. The polypropylene resin may be a polypropylene homopolymer (e.g., an isotactic polypropylene homopolymer) or a polypropylene copolymer. Examples of polypropylene copolymers for the polypropylene resin include random polypropylene copolymers (e.g., including about 60 weight percent or more, about 80 weight percent or more, about 90 weight percent or more, about 94 weight percent or more, or about 96 weight percent or more propylene) and impact polypropylene copolymers having an elastomeric phase distributed in an isostatic polypropylene (e.g., in an isostatic polypropylene homopolymer).

By way of example, the polypropylene resin may be a random copolymer having a crystallinity of about 30 percent or more. If present in the polymeric adhesive composition, the amount of the one or more polypropylene resins preferably is up to about 35 weight percent. The amount of the polypropylene resin may be about 30 weight percent or less, about 20 weight percent or less, about 15 weight percent or less, or about 10 weight percent or less, based on the total weight of the polymeric adhesive composition. The amount of the one or more polypropylene resins may be about 0 weight percent or more, about 5 weight percent or more or about 7 weight percent or more, based on the total weight of the polymeric adhesive composition.

The polypropylene resin preferably has rheological properties suitable for extruding as a layer of a film. For example, the polypropylene resin may have a melt flow rate (in units of g/10 min, as measured according to ISO 1133 at 230 °C/2.16kg) of about 0.2 or more, about 0.4 or more, about 0.6 or more, or about 0.8 or more and/or about 50 or less, about 20 or less, about 8 or less, or about 5 or less. The polypropylene resin preferably is sufficiently stiff so that it imparts a desired level of stiffness to the film. For example, the polypropylene resin may be characterized by a flexural modulus of about 200 MPa or more, preferably about 400 MPa or more, even more preferably about 700 MPa or more, and most preferably about 1000 MPa or more, as measured according to ASTM D790A, 1% secant). The flexural modulus, thus measured is typically about 4500 MPa or less, or about 2500 MPa or less. The polypropylene resin preferably has a density of about 0.83 g/cm3 or more, more preferably about 0.86 g/cm3 or more, and most preferably about 0.88 g/cm3 or more. The polypropylene resin preferably has a density of about 1.06 g/cm3 or less, more preferably about 0.99 g/cm3 or more, and most preferably about 0.94 g/cm3 or more. The polypropylene resin may be a film grade, such as PP 3276 (commercially available from Total Petrochemicals), a polypropylene homopolymer having a density of about 0.905 g/cm3 (as measured according to ASTM D1505), a melt flow rate of about 1.8 g/10 min (as measured according to ISO 1133 at 230 °C/2.16 kg), a flexural modulus of about 1.2 GPa (e.g., as measured according to ASTM D790), a peak melting temperature of about 163 °C (as measured by differential scanning calorimetry), and a crystallinity of greater than 40 percent (as measured by differential scanning calorimetry).

Properties of the polymeric adhesive composition

The polymeric adhesive composition preferably has melt behavior suitable for processing by one or more polymer processing methods, such as injection molding, blow molding, or extrusion. Preferably the polymeric adhesive composition may be extruded using a film extrusion process. The melt flow rate of the polymeric adhesive composition may be about 0.2 g/10 min or more, about 0.5 g/10 min or more, about 0.8 g/10 min or more, or about 1.0 g/10 min or more. The melt flow rate of the polymeric adhesive composition may be about 200 g/10 min or less, preferably about 60 g/10 min or less, more preferably about 20 g/10 min or less, even more preferably about 10 g/10 min or less, and most preferably about 5 g/10 min or less. The melt flow rate of the polymeric adhesive composition may be measured according to ISO 1133 at a temperature of about 190 °C, with a load of 2.16 kg. Preferably, the components of the composition are selected so that the resulting polymeric adhesive composition is characterized by a melt flow rate as discussed above. Such selection may include consideration of one or more properties of the components (e.g., melt flow rate, long chain branching, composition, molecular weight, and molecular weight distribution).

The total amount of the grafted polyolefin, the propylene based elastomer, the polyethylene resin(s) (i.e., ethylene-containing polymer) and any polypropylene resin(s) preferably is about 95 percent to about 100 percent by weight, based on the total weight of the polymeric adhesive composition. More preferably, the total amount of the grafted polyolefin, the propylene based elastomer, and the polyethylene resin(s) is about 95 percent to about 100 percent by weight, based on the total weight of the polymeric adhesive composition.

It may desirable for the polymeric adhesive compositions according to the teachings herein to be employed in a food package, such as film for packaging food. As such, the polymeric adhesive composition preferably has low levels of extractables. For example, the amount of extractables may be sufficiently low for packaging a food product including fat, water, a meat product, a dairy product, a baby food, or any combination thereof. Preferably the extractables level meets one or more requirements for food packaging (e.g., in the U.S., Japan, or Europe. The extractables level may be determined on the polymeric adhesive composition or on a film including a layer of the polymeric adhesive composition, such as described herein.

Filler

The polymeric composition preferably is substantially or entirely free of filler. For example, if present, the amount of any filler material is preferably about 7 weight percent or less, more preferably about 5 weight percent or less, even more preferably about 3 weight percent or less, and most preferably about 1 weight percent or less. The use of filler may affect the ability to process the polymeric composition. For example, the polymeric composition may be free of filler or have a sufficiently low amount of filler so that it may be extruded in a film process. Similarly, the total amount of polymer in the polymeric composition may be about 93 weight percent or more, about 95 weight percent or more, about 97 weight percent or more, about 99 weight percent or more, or about 100 weight percent, based on the total weight of the polymeric composition.

Additives

The polymeric composition may optionally include one or more additives. The additives may include any additive employed in polyolefin composition. For example, the additive(s) may include one or any combination of the following: a light stabilizer, a process aid, an antioxidant, a process stabilizer, a flow aid, a lubricant, a pigment or other colorant, a nucleating agent, or a heat stabilizer. If present the total amount of the one or more additives preferably is about 5 weight percent or less, more preferably about 3 weight percent or less, and most preferably about 2 weight percent or less, based on the total weight of the polymeric composition. The amount of the one or more additives may be about 0.0 weight percent or more, about 0.1 weight percent or more, about 0.2 weight percent or more, or about 0.4 weight percent or more, based on the total weight of the polymeric composition.

Film

The film according to the teachings herein include at least one tie layer that includes a propylene based elastomer, such as a propylene based elastomer according to the teachings herein. For example, the tie layer may include a polymeric composition according to the teachings herein.

Film having two different polymer layers (e.g., two different polyolefin layers).

The tie layer may be interposed between a first layer formed of one or more first polymers and second layer formed of one or more second polymers different from the first polymers.

The first polymer may include one or more polyethylene resins (such as a polyethylene resin according to the teachings herein) and the second polymer may include one or more propylene resins (such as a propylene resin according to the teachings herein). Preferably, the first layer includes 60 weight percent or more of the polyethylene resins. Preferably, the second layer includes 60 weight percent of the polypropylene resins. The tie layer preferably is in direct contact with both the first layer and the second layer. The tie layer preferably includes about 50 weight percent or more of a polyethylene resin (such as a polyethylene resin according to the teachings herein) and 10 weight percent or more of a propylene based elastomer (such as a propylene based elastomer according to the teachings herein). Preferably, the propylene based elastomer is entirely amorphous or has a crystallinity of up to about 25 percent. It will be appreciated that the first layer may consist substantially of or entirely of the one or more polyethylene resins; and/or the second layer may consist substantially of or entirely of the one or more polypropylene resins. When employed between two polyolefin layers, the tie layer preferably is substantially free of or entirely free of any graft polymer. For example, the amount of graft polymer in the tie layer may be about 0 weight percent or up to about 0.2 weight percent. The tie layer may consist substantially of or entirely of the polyethylene resin and the propylene based elastomer. The tie layer may additionally include a polypropylene resin. For example, the tie layer may consist substantially of or entirely of the polyethylene resin, the propylene based elastomer, and the polypropylene resin.

A tie layer including a propylene based elastomer may be employed in a film including a first olefinic polymer layer including one or more polyolefin hompolymers or copolymers; a second olefinic polymer layer including about 60 weight percent or more of one or more polypropylene resins; a barrier layer interposed between the first and second olefinic polymer layers; and a first tie layer interposed between the first olefinic polymer layer and the barrier layer. The film preferably includes a second tie layer interposed between and in direct contact with the second olefinic polymer layer and the barrier layer. The tie layer preferably includes a polymeric composition according to the teachings herein (i.e., including at least a grafted polyolefin, a polyethylene resin and a polypropylene based elastomer). The first olefinic polymer layer preferably includes about 60 weight percent or more of one or more polyethylene resins or about 60 weight percent or more of one or more polypropylene resins. Preferably, the first tie layer is in direct contact with the first olefinic polymer layer and/or the barrier layer. It will be appreciated that the tie layer may be robust with respect to adhesion to different polyolefins so that the first tie layer and the second tie layer have the same polymeric composition (e.g., regardless of whether the olefinic first and second polymer layers are the same or different). The adhesion of the tie layer to the olefinic polymer layers may be sufficient so that any failure between an olefinic layer and a barrier layer primarily or entirely occurs at a boundary between the tie layer and the barrier layer.

A film including a tie layer interposed between a first layer and a second layer may include the tie layer in direct contact with the first layer and the second layer. Preferably the tie layer includes about 40 weight percent or more of a polyethylene and 10 weight percent or more of a propylene based elastomer having a crystallinity from about 2 percent to about 25 percent. Preferably the film has a total thickness of about 50 $\mu$m or less, and the thickness of the tie layer is about 20 percent or less of the total thickness.

Preferably, the film according to the teachings herein has a total thickness of about 2000 $\mu$m or less, more preferably about 1200 $\mu$m or less, even more preferably about 800 $\mu$m or less, even more preferably about 200 $\mu$m or less, even more preferably about 100 $\mu$m or less, even more preferably about 50 $\mu$m or less, and most preferably about 30 $\mu$m or less. Typically, the total thickness of the film is about 2 $\mu$m or more, preferably about

8 $\mu$m or more, and more preferably about 15 $\mu$m or more.

Typically, the tie layer is a relatively thin layer. For example, the total thickness of the one or more tie layer(s) in a film may be about 30 % or less, about 20 % or less, about 15% or less, or about 10% or less of the total thickness of the film. The total thickness of the one or more tie layer(s) may be about 1% or more, about 2 % or more, about 4% or more, or about 6% or more of the total thickness of the film.

The film according to the teachings herein may be clear, transparent, translucent, opaque, or colored. The film may include one or more additional layers, one or more coatings, or both. In one aspect, the film is sufficiently clear so that the film can be employed in a packaging for identification of some or all of the contents inside the packaging.

A film according to the teachings herein may meet or exceed an extractables requirement, such as for food packing (e.g., as discussed herein with respect to the polymeric composition).

Film process

The polymeric compositions and tie layers according to the teachings herein may be employed in a multi-layered film process.

For example, the process may include a step of extruding a first film comprising at least a barrier layer, a skin layer including a polypropylene resin, and a tie layer in direct contact with both the barrier layer and the skin layer, where the tie layer includes a propylene based elastomer, a grafted polyolefin, and a polyethylene copolymer. The tie layer preferably includes one or more features as discussed herein with respect to the polymeric composition. The process may include a step of extruding a second film using the same equipment where the first skin layer is replaced with a material including a polyethylene resin and wherein the same tie layer is employed in the second film. It will be appreciated that when the same material is employed for two tie layers, it may be possible to extrude the two tie layers using the same extruder.

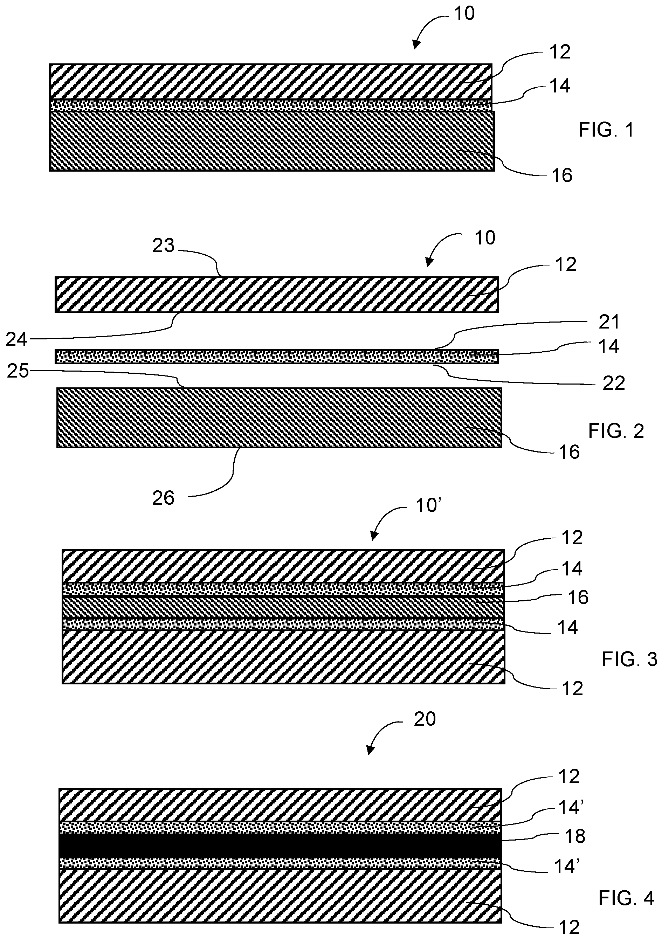

The films according to the teachings herein generally include three or more individual layers, such as illustrated in FIGs. 1, 2, 3, 4, and 5. Each of the layers preferably has a thickness, and opposing face surfaces perpendicular to the thickness direction. The thickness of the film may vary, but preferably is generally uniform (e.g., a variation in the thickness of about 50% or less, about 30% or less, about 20% or less, about 10% or less, or about 5% or less. The variation in the film thickness may be about 0% or more. The film 10 may include a tie layer 14 interposed between two polyolefin layers 12, 16, such as illustrated in FIG. 1. Preferably the two polyolefin layers are formed of different materials. For example, the multi-layered film 10 may include a first thermoplastic polyolefin layer 12 including a first polyolefin having at least about 60 weight percent ethylene. For example, the first polyolefin may be a semi-crystalline polymer including a crystalline phase having a structure characteristic of polyethylene crystals. With respect to FIG. 1, the multi-layered film 10 may include a second thermoplastic layer 16 including a second polyolefin having about 60 weight percent or more polypropylene and/or a crystallinity of about 20 percent or more. The second polyolefin preferably is a semi-crystalline polymer having a crystalline phase having a structure characteristic of isotactic polypropylene crystals. With reference to FIG. 1 and 2, the first thermoplastic polyolefin layer 12 may have a face surface 24 that contacts a face surface 21 of the tie layer and the second thermoplastic polyolefin layer 14 may have a face surface 25 that contacts an opposing face surface 22 of the tie layer, such as illustrated in FIG. 1 and 2. The first thermoplastic polyolefin layer 12 may have an opposing face surface 23 that is in contact with another layer (not shown) or that is an outer surface of the multi-layered film 10 (such as shown in FIGs. 1 and 2). The second thermoplastic polyolefin layer 16 may have an opposing face surface 26 that is in contact with another layer (not shown) or that is an outer surface of the multi-layered film 10 (such as shown in FIGs. 1 and 2). Preferably, adjacent layers contact each other over substantially the entirety of their facing surfaces (e.g., 21 and 24; and 22 and 25). A film may include a plurality of tie layers, such as illustrated in FIG. 3.

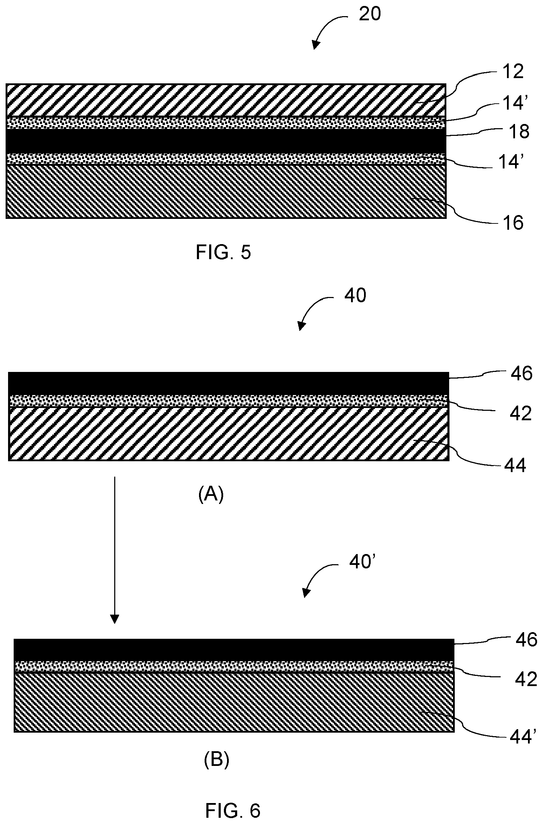

A multi-layered film 10', 20 may include two or more tie layers 14, 14' such as illustrated in FIGs. 3, 4, and 5. Preferably, each tie layer 14, 14' has surface contact with at least one thermoplastic polyolefin layer 12, 16. Each tie layer 14 may be in direct contact with two thermoplastic polyolefin layers, 12, 16 such as illustrated in FIG. 3. Each tie layer 14', may be in direct contact with one thermoplastic polyolefin layer 12, 16 along a first face surface and in direct contact with a barrier layer 18 along an opposing face surface, such as illustrated in FIG. 4 and FIG. 5. Preferred barrier layers 18 are interposed between and in direct contact with spaced apart tie layers 14', such as illustrated in FIG. 4 and 5.

The polymeric adhesive compositions according to the teachings herein may allow for more efficient transition between different film structures, such as illustrated in FIG. 6. For example, the first film structure may include a thermoplastic polyolefin layer (structure A), and the second film structure may include a different thermoplastic polyolefin layer (structure B). By way of example, the process may include replacing a polypropylene layer with a polyethylene layer or vice versa. Preferably, the change in the thermoplastic polyolefin layer is achieved without changing the tie layer 42, without changing the barrier layer or both.

In-line process

The method for manufacturing the polymeric adhesive composition may include a step of polymerizing one or more monomers including ethylene in a reactor to form a reaction product including an ethylene-containing polymer. The polymerization reaction may be any polymerization reaction method suitable for polymerizing a polyethylene homopolymer or a polyethylene copolymer. For example, the polymerization reaction may be in a solution (e.g., including one or more monomer and a solvent), may be in a fluidized bed reactor (e.g., having particles of polymer suspending by a flowing gas), or may be in a slurry or emulsion. The ethylene-containing polymer may have a peak melting temperature as described herein. The process may include a step of separating the reaction product (e.g., the ethylene-containing polymer) from an unreacted monomer, from a solvent, from a carrier fluid, or any combination thereof. When the ethylene-containing polymer is removed from a polymerization reactor, it preferably is in an initial solid state (e.g., an original state). The polymerization reaction may occur on a polymerization line including one or more downstream processing steps which may be referred to as finishing steps. In an in-line process, a downstream processing step preferably occurs shortly after the polymer is removed from the polymerization reactor. For example, a finishing step preferably occur without packaging and/or transporting the polymer. Finishing steps preferably occurs at the same facility as the polymerization reaction. The time lapse between a polymer being removed from the reactor and being subjected to a finishing step preferably is about 24 hours or less, more preferably about 4 hours or less, even more preferably about 1 minutes or less, and most preferably about 30 minutes or less. For example, the process may be a continuous process in which polymer is continuously removed from the polymerization reactor and then is directly subjected to one or a series of finishing steps. The process may include a step of introducing the ethylene-containing polymer into a device (e.g., a compounding device) for melting and blending the ethylene-containing polymer with one or more other polymers. Preferably a propylene based elastomer is introduced into the device for melt blending with the ethylene-containing polymer. In some aspects, a grafted polyolefin may also be introduced into the device for melt blending with the ethylene-containing polymer and the propylene based elastomer. Preferably, the ethylene-containing polymer is first melted (e.g., heated above its peak melting temperature) in the compounding device or prior to entering the compounding device. The process preferably includes a finishing step including melt blending at least the ethylene-containing polymer and the propylene based elastomer. In some aspects, the process includes a finishing step including melt blending at least the ethylene-containing polymer, the propylene based elastomer, and the grafted polyolefin. Preferably, the ethylene-containing polymer is first heated to a temperature above its peak melting temperature during the melt blending step or just prior to the melt blending step. The process may include a step of adding the propylene based elastomer and one or more additional polymers (e.g., a polypropylene homopolymer, a polypropylene copolymer having a melting temperature of about 100 °C, an impact polypropylene copolymer including isotactic polypropylene, a grafted polyolefin, or any combination thereof) as separate materials, as an intermediate blend, or as a particle mixture including particles of the propylene based elastomer and different particles of the one or more additional polymers. The blending may result in a blend composition. Preferably, the blend composition includes domains of the propylene based elastomer distributed throughout a continuous matrix of the ethylene-containing polymer. The process may include a step of removing the blend composition from the compounding device. The process may include a finishing step of cooling the blend composition. The cooling of the blend composition preferably is at a temperature sufficiently low so that at least a portion of the ethylene-containing polymer crystallizes. Preferably, the first crystallization of a portion of the ethylene-containing polymer after being removed from the polymerization reactor occurs upon cooling the blend composition. For example, the first thermal cycling of the ethylene-containing polymer above its peak melting temperature and then below its peak melting temperature may occur in one or more finishing steps that includes cooling of the blend composition.

The finishing steps may include a step of pelletizing the blend composition or otherwise forming particles each including at least the ethylene-containing polymer and the propylene based elastomer. The finishing steps may include a step of packaging the blend composition (e.g., in the form of pellets or other particles).

The process may include melt compounding a plurality of polymers including an ethylene-containing polymer, a propylene based elastomer, and a grafted polyolefin to form a blend composition. The blend composition may be formed into pellets or other particles of suitable size for introducing into a screw and barrel assembly of a polymer extruder. The ethylene-containing polymer, the propylene based elastomer, and the grafted polyolefin are preferably selected so that the resulting blend composition has a melt flow rate of about 0.3 to about 15 g/10 min (preferably 0.5 to 5 g/10 min) as measured according to ISO 1133 at 190 °C / 2.16 kg.

Preferably, the blend composition (e.g., the polymeric adhesive composition) includes from about 30 weight percent to about 85 weight percent of the ethylene-containing polymer, based on the total weight of the blend composition or based on the total weight of the polymers in the blend composition. Preferably, the blend composition includes from about 10 weight percent to about 50 weight percent of the propylene based elastomer, based on the total weight of the blend composition or based on the total weight of the polymers in the blend composition. Blend compositions including a grafted polyolefin preferably include the grafted polyolefin in an amount from about 3 to about 40 weight percent, based on the total weight of the blend composition.

The melt blending step may include heating the ethylene-containing polymer and the propylene based elastomer to a temperature of about 110 °C or more, preferably about 130 °C or more, even more preferably about 150 °C or more and most preferably about 170 °C or more. The melt blending step preferably is at a temperature of about 350 °C or less, and more preferably about 300 °C or less.

The process may include a step of cooling the blend composition from a melt state to a temperature of about 100 °C or less, preferably about 80 °C or less, more preferably about 70 °C or less, and most preferably about 50 °C or less. Preferably, the blend composition is cooled to a temperature sufficiently low so that particles of the blend composition do not agglomerate.

Preferably, the first heating of the ethylene-containing polymer to a temperature of about 20°C or more (preferably about 40 °C or more) above the peak melting temperature of the ethylene-containing polymer is in the melt blending step. Preferably, the first cooling of the ethylene-containing copolymer from a temperature above the peak melting temperature to a temperature of at least about 20 °C (preferably at least about 40 °C) below the peak melting occurs in the step of cooling following the melt blending step.

Preferably exposure to thermal history of the ethylene-containing polymer is reduced or minimized from the step of polymerization to the step of melt blending.

Preferably the ethylene-containing polymer is not pelletized prior to the melt blending. Preferably the ethylene-containing polymer is not packaged for shipment prior to melt blending. Preferably, the ethylene-containing polymer is not transported (other than via in-line equipment) prior to melt blending. Preferably, when being fed into a device for compounding, the ethylene containing polymer is in a form substantially identical to its form when it is removed from the polymerization reactor (or shortly thereafter, such as after a separation step). For example, the process may include a step of separating the reaction product of a fluidized bed reactor (e.g., including the ethylene-containing polymer) from one or more unreacted monomers including ethylene. After such separation, the reaction product preferably is in the form of a powder. Preferably, the time from the removal of the ethylene-containing polymer from the polymerization reactor to the start of the melt blending is about 2000 minutes or less, more preferably about 50 minutes or less, even more preferably about 20 minutes or less, even more preferably about 12 minutes or less, and most preferably about 7 minutes or less.

The melt blending step may employ a device suitable for providing sufficient shear and/or heat for forming a blend composition having the propylene based elastomer dispersed in the ethylene-containing polymer. The device may be a compounding device such as a compounding single screw extruder, an internal mixer, a kneader, a twin screw extruder, or any other compounding device suitable for compounding of polymers. The polymers may be heated before being introduced into the device and/or may be heated in the device. The compounding device may include one or more screws in a barrel assembly. Preferably, the melt blending step is in a continuous process. Preferably the time at which the ethylene-containing polymer is at a temperature above its peak melting temperature (e.g., during the one or more finishing steps of a polymerization line) is about 30 minutes or less, more preferably about 15 minutes or less, even more preferably about 6 minutes or less, even more preferably about 4 minutes or less, and most preferably about 3 minutes or less.

The blend composition may be the same as or different from the polymeric adhesive composition. For example, the process may include a step of adding one or more additional components to the blend composition (e.g., in a finishing step or after the completion of all of the finishing steps). Preferably the blend composition is the same as the polymeric adhesive composition so that no further compounding step is necessary.

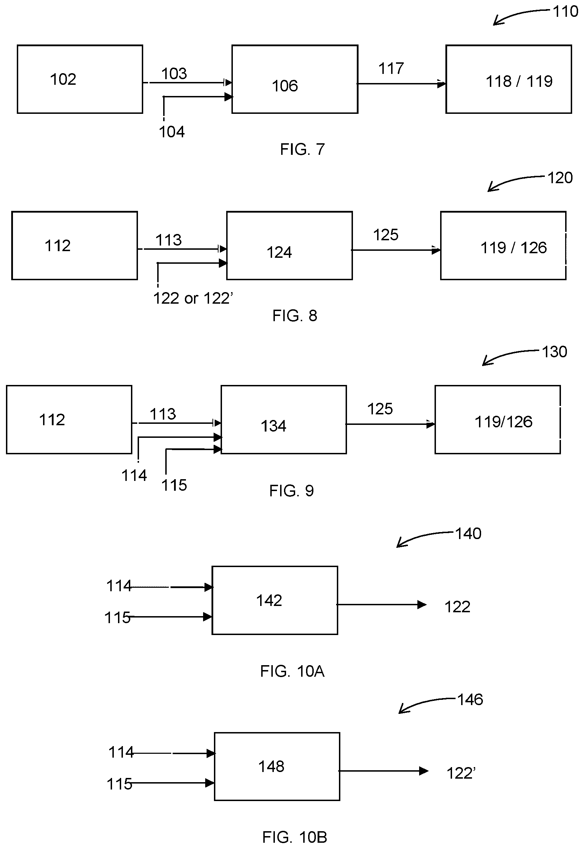

The method for manufacturing 110 a polymer blend composition may include a step of polymerizing 112 an ethylene-containing polymer 113, such as illustrated in FIG. 7. After the ethylene-containing polymer is polymerized, the method may include a step of melt blending 116 the ethylene-containing polymer 113 with at least a propylene based elastomer 114 to form the polymer blend composition 117. The process may include a step of cooling 118 the blend composition 117 (e.g., for crystallizing at least a portion of the ethylene-containing polymer 113). The ethylene-containing polymer 113 is preferably in an original post-reactor state (e.g., a melt state having no prior thermal cycling or a solid state formed during polymerization) immediately prior to melt blending 116. Preferably, the ethylene-containing polymer 113 is first heated to a temperature above its melting temperature (i.e., above its peak melting temperature) in a device for the melt blending step 116. Preferably, the first crystallization of at least a portion of the ethylene-containing polymer, after being removed from a polymerization reactor, is in the step of cooling the blend composition. For example, the first thermal cycling of the ethylene-containing polymer 113 to a temperature greater than its peak melting temperature (e.g., to a temperature of at least about 20 °C, or 40 °C above its melting temperature), and then to a temperature below its peak melting temperature (e.g., to a temperature at least about 20 °C, or at least about 40 °C below its melting temperature) may occur in the melt blending 116 and cooling steps 118.

The method for manufacturing 120 a polymer blend composition may include a step of polymerizing 112 an ethylene-containing polymer 113, such as illustrated in FIG. 8. After the ethylene-containing polymer is polymerized, the method may include a step of melt blending 124 the ethylene-containing polymer 113 with at least an intermediate mixture 122 or intermediate melt blend 122' including at least a propylene based elastomer 114 (not shown) and one or more additional polymers 115 (not shown) to form a polymer blend composition 125. The one or more additional polymers 115 preferably includes, consists essentially of, or entirely of a grafted polyolefin (preferably a grafted polyethylene), a polypropylene homopolymer, an impact polypropylene copolymer (e.g., including isotactic polypropylene and having a melting temperature of about 140 °C or more), a random polypropylene copolymer (preferably having a melting temperature of about 100 °C or more, or about 120 °C or more). The intermediate mixture preferably has particles including the propylene based elastomer and different particles having the one or more additional polymers. The intermediate melt blend preferably includes particles having both the propylene based elastomer and a grafted polyolefin. It will be appreciated that the intermediate mixture 122 or the intermediate melt blend 122' may include one or more additional polymers. An additional polymer may be provided in the same particles or in a different particle. The process may include a step of cooling 126 the polymer blend composition 125 (e.g., for crystallizing at least a portion of the ethylene-containing polymer 113). The ethylene-containing polymer 113 is preferably in an original post-reactor state immediately prior to melt blending 24. Preferably, the ethylene-containing polymer 113 is first heated to at temperature above its melting temperature (i.e., above its peak melting temperature) in a device for the melt blending step. Preferably, the first crystallization of at least a portion of the ethylene-containing polymer, after being removed from a polymerization reactor, is in the step of cooling the blend composition. For example, the first thermal cycling of the ethylene-containing polymer 113 to a temperature greater than its peak melting temperature (e.g., to a temperature of at least about 20 °C, or 40 °C above its melting temperature), and then to a temperature below its peak melting temperature (e.g., to a temperature at least about 20 °C, or at least about 40 °C below its melting temperature) may occur in the melt blending 124 and cooling steps 126.

The method for manufacturing 130 a polymer blend composition may include a step of polymerizing 112 an ethylene-containing polymer 113, such as illustrated in FIG. 9. After the ethylene-containing polymer is polymerized, the method may include a step of melt blending 134 the ethylene-containing polymer 113 with a propylene based elastomer 114 and a grafted polyolefin 115 to form a polymer blend composition 125. With reference to FIG. 9, the propylene based elastomer 114 and the grafted polyolefin 115 may be provided as separate components. It will be appreciated that the propylene based elastomer 114, the one or more additional polymers (e.g., grafted polyolefin and/or polypropylene homopolymer) 115, or both may be provided as an intermediate blend including one or more additional polymers.

An intermediate polymer mixture 122 may be prepared by mixing 142 different particles including first particles including, consisting essentially of, or consisting entirely of the propylene based elastomer 114 and second particles including, consisting essentially of or consisting entirely of the one or more additional polymers (e.g., grafted polyolefin and/or polypropylene hompolymer), such as illustrated in FIG. 10A. The step of mixing is preferably at a mixing temperature below the peak melting temperature of the one or more additional polymers (e.g., below the melting temperature of the grafted polyolefin and/or polypropylene homopolymer). The step of mixing more preferably is at a mixing temperature less than the peak melting temperature of the propylene based elastomer. For example, the mixing may be at a temperature of about 100 °C or less, about 70 °C or less, about 50 °C or less, about 40 °C or less, about 30 °C or less, or about 25 °C or less. Preferably, the mixing of the particles is at a temperature of about 0 °C or more, more preferably about 10 °C or more.

An intermediate polymer blend 122' may be prepared by melt blending 146 at least the propylene based elastomer 114 and one or more additional polymers (e.g., a grafted polyolefin (such as a grafted polyethylene), and/or a polypropylene homopolymer)115, such as illustrated in FIG. 10B. The step of melt blending 146 is preferably at a blending temperature above the peak melting temperature of the propylene based elastomer 114. The step of melt blending 146 more preferably is at a mixing temperature greater than the peak melting temperature of the one or more additional polymers 115. For example, the melt blending may be at a temperature of about 70 °C or more, about 110 °C or more, about 150 °C or more, about 160 °C or more, about 170 °C or more, or about 200 °C or more. Preferably, the melt blending is at a blending temperature of about 360 °C or less, more preferably about 310 °C or less.

The polymeric adhesive composition according to the teachings herein may include a polymer blend composition prepared in an in-line process, such as described herein.

Applications

The methods and compositions according to the teachings herein may be employed in articles having multiple layers or components formed of chemically different materials for adhering the different materials. The multi-layered article preferably is a multi-layered film, a multi-layered pipe, a multi-layered container, or other multi-layered structure. The multi-layered article includes one or more layers of a polymeric adhesive composition according to the teachings herein. The multi-layered article preferably includes one or more polyolefin layers in direct contact with a layer of the polymeric adhesive composition. For example, the polymeric adhesive compositions may be employed in a multi-layered film for adhering a layers of two different polyolefins (i.e., a first layer including a first polyolefin and a second layer including a second polyolefin different from the first polyolefin), or for adhering a layer of a polyolefin with a layer of a barrier material.

The polymeric adhesive composition may be employed as a tie layer, for adhering two or more layers of a packaging (e.g., a multi-layered film) or other multi-layered article. For example, the compositions may be employed as a tie layer for a packaging or container that includes a barrier layer. In one aspect, the multi-layered film includes a barrier layer that reduces or eliminates the transmission of oxygen (e.g., $O_2$), water (e.g., $H_2O$), carbon dioxide (e.g., $CO_2$), or any combination thereof, through the packaging (e.g., compared with the rate of transmission through a polyolefin containing layers of the film). The barrier layer may reduce the transmission rate of a hydrocarbon (e.g., a hydrocarbon liquid or gas) through an article. Transmission rates may be measured using ASTM D1434 or ASTM D3985. Preferred barrier layers include or consist essentially of an ethylene vinyl alcohol copolymer (e.g., prepared by co-polymerizing ethylene and vinyl acetate followed by a hydrolysis reaction), a copolymer including EVOH, a polyamide, or a copolymer including a polyamide. As another example, the tie layer adheres a polyethylene layer and a polypropylene layer. A multi-layered film may include a plurality of tie layers. For example, the multilayered film may include one or any combination of the following tie layers: a tie layer for adhering a barrier layer to a first polyolefin layer; a tie layer for adhering a barrier layer to a second polyolefin layer (e.g., the same or different from the first polyolefin layer), or for adhering a first polyolefin layer to a polyolefin layer different from the first polyolefin layer.

The following comments pertain generally to all teachings. Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "'x' parts by weight of the resulting composition" also contemplates a teaching of ranges of same recited amount of "x" in percent by weight of the resulting composition.

Unless otherwise stated, any test method standard referenced herein is for the version existing as of the earliest filing date in which the standard is recited.

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes. The term "consisting essentially of' to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of, or even consist of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps. Moreover, unless expressly set forth, the recitation of "first", "second", or the like does not preclude additional ingredients, steps, or other elements. All references herein to elements or metals belonging to a certain Group refer to the Periodic Table of the Elements published and copyrighted by CRC Press, Inc., 1989. Any reference to the Group or Groups shall be to the Group or Groups as reflected in this Periodic Table of the Elements using the IUPAC system for numbering groups. It is understood that the above description is intended to be illustrative and not restrictive.

Many embodiments as well as many applications besides the examples provided will be apparent to those of skill in the art upon reading the above description. The scope of the invention should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. The omission in the following claims of any aspect of subject matter that is disclosed herein is not a disclaimer of such subject matter, nor should it be regarded that the inventors did not consider such subject matter to be part of the disclosed inventive subject matter.

TEST METHODS

Adhesion is measured using a T-peel on a specimen of an extruded film sample after aging at about 25 °C for about 48 hours.

EXAMPLES

Example 1

Example 1 is a tie layer adhesive composition including a polyethylene resin and a propylene based elastomer. The tie layer is a blend of PETROTHENE® GA502024 linear low density polyethylene (commercially available from LYONDELLBASELL) and VISTAMAXX® 6102 propylene based elastomer (commercially available from EXXONMOBIL). Example 1A is a blend of 90 weight percent of the linear low density polyethylene and 10 weight percent of the propylene based elastomer. Example 1B is a blend of 85 weight percent of the linear low density polyethylene and 15 weight percent of the propylene based elastomer. Example 1C is a blend of 80 weight percent of the linear low density polyethylene and 20 weight percent of the propylene based elastomer. Example 1D is a blend of 75 weight percent of the linear low density polyethylene and 25 weight percent of the propylene based elastomer.

Example 2

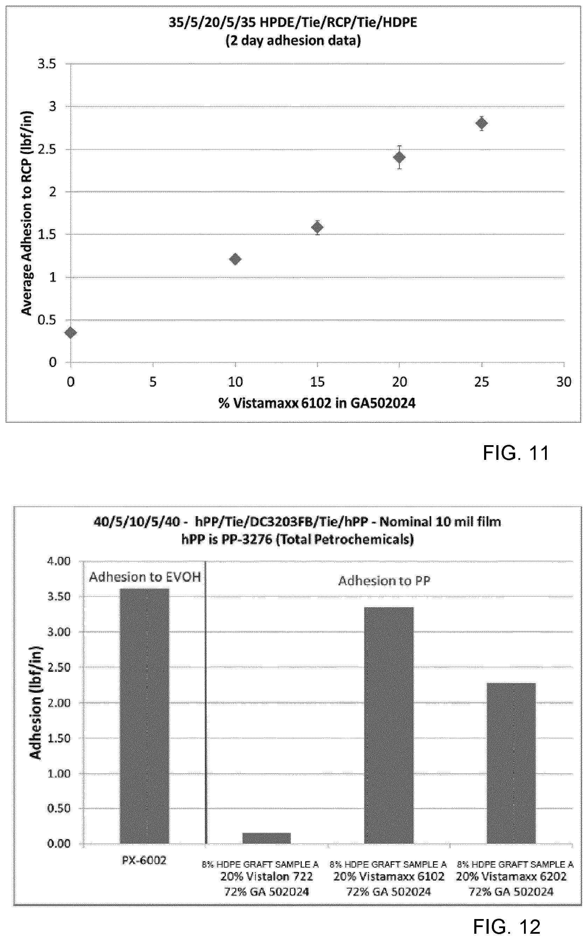

Example 2 is a multi-layer film including the tie layer adhesive composition of Example 1. The multi-layer film has the following layer structure: polyethylene resin / tie layer / polypropylene resin / tie layer / polyethylene resin with a thickness ratio of 35 / 5 / 20 / 5 / 35. Both polyethylene resin layers are made from ALATHON® M6210 high density polyethylene (commercially available from LYONDELLBASELL). The polypropylene resin layer (i.e., core layer) is made from BRASKEM TR3020F random polypropylene copolymer. The same tie layer adhesive composition is used for both tie layers. In Example 2A, the tie layers use the composition of Example 1A. In example 2B, the tie layers use the composition of Example 1B. In example 2C, the tie layers use the composition of Example 1C. In example 2D, the tie layers use the composition of Example 1D. The films have a thickness of about 5 mils (i.e., about 0.127 $\mu$m. The films are tested for adhesion by a T-peel test according to ASTM D 1786-01. The peeling of the film layers occurs between a tie layer and the polypropylene core layer. The results of the T-peel test are shown in FIG. 11.

Comparative Example 1.

Comparative Example 1 is a multi-layered film prepared according to Example 2A, except the tie layer is 100% of the PETROTHENE® GA502024 linear low density polyethylene. The film of comparative Example 1 is tested for adhesion of the tie layers to the core layer and the skin layers. Failure occurs between the tie layer and the core layer. The results are shown in FIG. 7.

Testing of Example 2 and Comparative Example 1.

With reference to FIG. 11, the peel strength of the examples having the propylene based elastomer in the tie layer (Examples, 2A, 2B, 2C, and 2D) is at least about 3 times the peel strength of Comparative Example 1 which does not include the propylene based elastomer.

Example 3

Example 3 is a tie layer adhesive composition for adhesion to different thermoplastic polyolefin resins, and to a barrier layer material. Example 3 is a blend composition including a grafted polyolefin, a polyethylene resin, and propylene based elastomer. The tie layer adhesive composition includes about 8 weight percent of the grafted polyolefin, about 20 weight percent of the propylene based elastomer and about 72 weight percent of the polyethylene resin. The polyethylene resin is a linear low density polyethylene having a comonomer of 1-butene (PETROTHENE® GA502024). The grafted polyolefin is GRAFTED HDPE SAMPLE A produced by LYONDELLBASELL. GRAFTED HDPE SAMPLE A is produced by grafted a high density polyethylene with maleic anhydride. The amount of maleic anhydride that is grafted is from about 1.7 to about 2.1 weight percent based on the total weight of the GRAFTED HDPE SAMPLE A. GRAFTED HDPE SAMPLE-A has a melt flow rate of about 8 to 12 g/10 min, as measured according to ISO 1133 at 190 °C/2.16 kg. In Example 3A, the propylene based elastomer is VISTAMAXX 6102 having an ethylene content of about 16 weight percent, a Hardness (durometer hardness) of about 66 Shore A (as measured according to ASTM D2240), a melt flow rate of about 3 g/10 min (as measured according to ISO 1133 at 230 °C/2.16 kg) and a flexural modulus of about 12.4 MPa (as measured according to ASTM D790 at 1% secant). In Example 3B, the propylene based elastomer is VISTAMAXX 6202 having an ethylene content of about 15 weight percent, a Hardness (durometer hardness) of about 66 Shore A (as measured according to ASTM D2240), a melt flow rate of about 20 g/10 min (as measured according to ISO 1133 at 230 °C/2.16 kg) and a flexural modulus of about 12.3 MPa (as measured according to ASTM D790 at 1% secant). Both VISTAMAXX 6102 and 6202 are commercially available from EXXONMOBIL. The grafted polyolefin is a high density polyethylene having maleic anhydride grafts.

Example 4

Example 4 is a multilayered film having the following structure: 40% homopolymer polypropylene / 5% tie layer / 10% barrier layer / 5% tie layer / 40% homopolymer polypropylene. PP 3276 polypropylene homopolymer (commercially available from TOTAL PETROCHEMICALS) having a melt flow rate of about 2 g/10 min at 230 °C/2.16kg (as measured according to ISO 1133) is used for the two outer layers. PP 3276 has a melting temperature of about 163 °C, as measured by differential scanning calorimetry, a flexural modulus of about 1.206 GPa as measured according to ASTM D790, and a secant modulus of about 2.41 GPa in the machine direction and about 4.14 GPa in the transverse direction, as measured according to ASTM D882. The barrier layer is formed from SOARNOL DC3203FB EVOH (commercially available from SOARUS L.L.C.) having an ethylene content of about 32 mole percent and a melt flow rate of about 3.2 g/10 min as measured according to ISO 1133 at 210 °C / 2.16 kg. In Example 4A, both tie layers are formed from the tie layer composition of Example 3A. In Example 4B, both tie layers are formed from the tie layer composition of Example 3B. The adhesion between the tie layer and the polypropylene homopolymer is measured according to ASTM D 1876-01. Thus measured, the adhesion is about 3.3 Ibf/in for Example 4A and about 2.3 Ibf/in for Example 4B, as shown in FIG. 12.

Example 5

Example 5A and Example 5B are a multi-layered films prepared the same as Examples 4A and 4B. respectively, except the polypropylene homopolymer layers are replaced with linear low density polyethylene layers. The adhesion between the linear low density polyethylene layers and the tie layers is expected to be at least about 3 Ibf/in (as measured according to ASTM D1786-01), as shown in FIG. 12.

Comparative Example 2

Comparative Example 2 is a multilayered film having the same structure as described in Example 4, except the propylene based elastomer is replaced by an ethylene based elastomer, VISTALON® 722 ethylene propylene copolymer rubber (commercially available from EXXONMOBIL) having an ethylene content of about 72 weight percent (as measured according to ASTM D3900) and a melt index of about 1.0 g/10 min as measured according to ISO 1133 at 190 °C / 2.16 kg. The adhesion between the tie layer and the polypropylene homopolymer layer is less than about 0.2 Ibf/in (as measured according to ASTM D 1876-01), as shown in FIG. 12.

Comparative Example 3

Comparative Example 3 is a multilayered film having the same structure as described in Example 5, except the tie layer is replaced by a polypropylene adhesive, PLEXAR® PX-6002 tie resin (commercially available from LYONDELLBASELL) including a polypropylene and a grafted polymer. In this polypropylene adhesive, the grafted polymer is a polypropylene having maleic anhydride grafts. Although PLEXAR® PX-6002 tie resin has a melt flow rate of about 2.3 g/10 min as measured according to ISO 1133 at 230 °C/2.16 kg, it will be appreciated that the grafted polypropylene in the tie resin is expected to have a much higher melt flow rate (e.g., greater than 20 g/10 min). The adhesion between the tie layer and the linear low density polyethylene layers is expected to be less than 1 Ibf/inch (as measured according to ASTM D 1876-01).

Reference Numbers from Drawings

10 Multi-layered film

12 First thermoplastic polyolefin layer (e.g., including a polyolefin, such as a polyolefin having at least about 60 weight percent ethylene).

14 Tie layer (e.g., a layer in contact with a first thermoplastic polyolefin layer and/or a second thermoplastic polyolefin layers)

14', 14" Tie layer (e.g., a layer in contact with a barrier layer and/or a thermoplastic polyolefin layer.

16 Second thermoplastic polyolefin layer (e.g., including a polyolefin, such as a polyolefin having at least 60 weight percent propylene and/or a crystallinity of at least about 20 percent).

18 Barrier layer

20 Multi-layer film having a barrier layer interposed between two thermoplastic polyolefin layers.

21, 22 Opposing surfaces of the tie layer

23, 24 Opposing surfaces of the first thermoplastic polyolefin layer

25. 26 Opposing surfaces of the second thermoplastic polyolefin layer

40, 40' portion of a multi-layer film including at least a tie layer interposed between a barrier layer and a thermoplastic polyolefin layer

42 Tie layer

44 First thermoplastic polyolefin layer

44' Different first thermoplastic polyolefin layer different (i.e., different from (46).

46 Barrier layer

110 Method for manufacturing a composition including a propylene based elastomer

112 Polymerization of an ethylene-containing polymer

113 Ethylene-containing polymer (e.g., in original post-reactor state)

114 Propylene based elastomer

115 One or more additional polymers (e.g., a grafted polyolefin, a polypropylene homopolymer, an impact polypropylene copolymer, a random polypropylene copolymer having a melting temperature of about 100 °C or more, or any combination thereof).

116 Melt blending (e.g., compounding) at least an ethylene-containing polymer and a propylene based elastomer

117 Blend composition including, consisting essentially of, or consisting entirely of the ethylene-containing polymer and the propylene based elastomer

118 Cooling of the blend composition

119 Crystallization of at least a portion of the ethylene-containing polymer(e.g., initial post-polymerization and/or post-reactor crystallization)

120 Method for manufacturing a composition including a propylene based elastomer and one or more additional polymers (e.g., a grafted polyolefin and/or a polypropylene hompolymer).

122 Mixture having particles including a propylene based elastomer and different particles including one or more additional polymers (e.g., a grafted polyolefin, a polypropylene homopolymer, an impact polypropylene copolymer, a random polypropylene copolymer having a melting temperature of about 100 °C or more, or any combination thereof).

122' Blend (e.g., melt blend) including particles having both a propylene based elastomer and one or more additional polymers (e.g., a grafted polyolefin, a polypropylene homopolymer, an impact polypropylene copolymer, a random polypropylene copolymer having a melting temperature of about 100 °C or more, or any combination thereof).

124 Melt blending (e.g., compounding) at least an ethylene-containing polymer, a propylene based elastomer, and one or more additional polymers (e.g., a grafted polyolefin, a polypropylene homopolymer, an impact polypropylene copolymer, a random polypropylene copolymer having a melting temperature of about 100 °C or more, or any combination thereof).

125 Blend composition including, consisting essentially of, or consisting entirely of the ethylene-containing polymer, the propylene based elastomer, and one or more additional polymers (e.g., a grafted polyolefin, a polypropylene homopolymer, an impact polypropylene copolymer, a random polypropylene copolymer having a melting temperature of about 100 °C or more, or any combination thereof).

126 Cooling of the blend composition

130 Method for manufacturing a composition including a propylene based elastomer and one or more additional polymers (including e.g., a grafted polyolefin and/or a polypropylene homopolymer).

142 Mixing of particles (e.g., below the melting temperature)

148 Melt blending at least the propylene based elastomer and one or more additional polymers (e.g., including or consisting of a grafted polyolefin, such as a grafted polyethylene).

Additional Examples B

Example 1. A polymeric composition comprising:

i) from about 0.1 to about 20 weight percent of a grafted polyolefin, wherein the grafted polyolefin has a polyolefin backbone including about 80 weight percent or more ethylene, based on the total weight of the polyolefin backbone, and a functional graft including one or more oxygen atoms;
ii) from about 5 to about 50 weight percent of a propylene based elastomer, wherein the propylene based elastomer has a propylene concentration of about 75 weight percent or more, and a crystallinity 25 percent or less;
iii) from about 40 to about 90 weight percent of one or more polyethylene resins; and
iv) optionally up to about 35 weight percent of one or more polypropylene resins having a crystallinity of about 30 percent or more;

wherein the functional graft is present in an amount from about 0.02 to about 1.2 weight percent based on the total weight of the polymeric composition; the total amount of the grafted polyolefin, the propylene based elastomer, the polyethylene resins, and the polypropylene resins is from about 95 to about 100 weight percent, based on the total weight of the polymeric composition.

Example 2. The polymeric composition of example 1, wherein the polymeric composition has a melt flow rate from about 0.5 to about 10 g/10 min as measured according to ISO 1133 about 190 °C / 2.16 kg.

Example 3. The polymeric composition of example 1 or 2, wherein the polyethylene resins includes a linear low density polyethylene, wherein the linear low density polyethylene includes ethylene and one or more olefinic comonomers selected from the group consisting of 1-butene, 1-hexene, and 1-octene, wherein the total amount of the ethylene and the one or more olefinic comonomers in the linear low density polyethylene is from about 95 percent to about 100 percent by weight.

Example 4. The polymeric composition of any of examples 1 through 3, wherein the polymeric composition is substantially or entirely free of filler, or the amount of filler is about 5 weight percent or less, based on the total weight of the polymeric composition (preferably the total amount of polymer in the polymeric composition is about 95 weight percent or more, about 98 weight percent or more, about 99 weight percent or more, or about 100 weight percent.

Example 5. The polymeric composition of any of examples 1 through 4, wherein the polymeric composition includes at least 5 weight percent of the one or more propylene resins.

Example 6. The polymeric composition of any of examples 1 through 5, wherein the propylene based elastomer has a propylene concentration of about 95 weight percent or less.

Example 7. The polymeric composition of any of examples 1 through 5, wherein the composition includes from about 0.1 weight percent to about 5 weight percent of one or more additives.

Example 8. The polymeric composition of any of examples 1 through 7, wherein the functional graft includes maleic anhydride, maleic acid, or both.

Example 9. The polymeric composition of any of examples 1 through 8, wherein the grafted polyolefin has a melt flow rate from about 0.5 to about 5 g/10 min as measured according to ISO 1133 at 190 °C /. 2.16 kg, and the grafted polyolefin has a crystallinity from about 25 to about 75 percent as measured by differential scanning calorimetry.

Example 10. The polymeric composition of any of examples 1 through 9, wherein the propylene based elastomer is a random copolymer having a crystallinity from about 4 percent to about 15 percent.

Example 11. A film comprising:

a first layer including about 60 weight percent or more of one or more polyethylene resins;
a second layer including about 60 polymeric weight percent or more of one or more polypropylene resins;
a tie layer between and in direct contact with the first layer and the second layer, wherein the tie layer includes about 40 weight percent or more of a polyethylene and 10 weight percent or more of a propylene based elastomer having a crystallinity from about 2 percent to about 25 percent; wherein the film has a total thickness of about 800 μm or less (e.g., about 200 μm or less or about 50 μm or less), and the thickness of the tie layer is about 20 percent or less of the total thickness.

Example 12. The film of example 11, wherein the first layer consists entirely of one or more polyethylene resins.

Example 13. The film of example 11 or 12, wherein the second layer consists entirely of one or more polypropylene resins.

Example 14. The film of any of examples 11 through 13, wherein the polyethylene resin is a low density polyethylene, a linear low density polyethylene, a high density polyethylene, or copolymer of ethylene and a polar comonomer (e.g., an ethylene vinyl acetate copolymer, preferably having an ethylene concentration of about 70 weight percent to about 95 weight percent).

Example 15. The film of any of examples 11 through 14, wherein the propylene based elastomer has a propylene concentration of about 80 to about 94 weight percent, based on the total weight of the propylene based elastomer.

Example 16. The film of any of examples 11 through 15, wherein the tie layer is substantially free of, or entirely free of any grafted polymer.

Example 17. The film of any of examples 11 through 16, wherein the second layer includes, consists substantially of, or consists entirely of one or more isotactic polypropylene homopolymers, one or more random polypropylene copolymers having a crystallinity of about 30 percent or more, or one or more impact polypropylene copolymers.

Example 18. The film of any of examples 11 through 17, wherein the tie layer includes a polypropylene homopolymer, one or more random polypropylene copolymers having a crystallinity of about 30 percent or more, or a polypropylene impact copolymer.

Example 19. The film of any of examples 11 through 17, wherein the tie layer consists entirely of the polyethylene and the propylene based elastomer.

Example 20. The film of any of example 18, wherein the tie layer consists entirely of the polypropylene, the propylene based elastomer, and the polyethylene.

Example 21. A film comprising:

a first olefinic polymer layer including one or more polyolefin hompolymers or copolymers;
a second olefinic polymer layer including about 60 weight percent or more of one or more polypropylene resins;
a barrier layer interposed between the first and second olefinic polymer layers;
a first tie layer interposed between the first olefinic polymer layer and the barrier layer;
a second tie layer interposed between and in direct contact with the second olefinic polymer layer and the barrier layer, wherein the first tie layer includes the polymeric composition of any of examples 1 through 10.

Example 22. The film of example 21, wherein the first olefinic polymer layer includes about 60 weight percent or more of one or more polyethylene resins.

Example 23. The film of example 21, wherein the first olefinic polymer layer includes about 60 weight percent or more of one or more polypropylene resins.

Example 24. The film of any of examples 21 through 23, wherein the first tie layer is in direct contact with the first olefinic polymer layer.

Example 25. The film of any of examples 21 through 24, wherein the first tie layer is in direct contact with the barrier layer.

Example 26. The film of any of examples 21 through 25, wherein the first tie layer and the second tie layer include the same polymeric composition.

Example 27. The film of example 21, wherein the first and second olefinic polymer layers are formed from the same polymers.

Example 28. The film of any of examples 21 through 27, wherein any adhesion failure between the first olefinic polymer layer and the barrier layer is at the boundary of the first tie layer and the barrier layer

Example 29. The film of example 28, wherein any adhesion failure between the second olefinic polymer layer and the barrier layer is at the boundary of the second tie layer and the barrier layer

Example 30. The film of any of example 21 through 29 wherein

the film is clear; and / or the film has a thickness of about 50 μm or less.

Example 31. A tie layer between and in direct contact with the first layer and the second layer, wherein the tie layer includes about 40 weight percent or more of a polyethylene and 10 weight percent or more of a propylene based elastomer having a crystallinity from about 2 percent to about 25 percent;

wherein the film has a total thickness of about 1800 μm or less, and the thickness of the tie layer is about 20 percent or less of the total thickness.

Example 32. A process comprising the steps of:

i. polymerizing one or more monomers including ethylene in a reactor to form a reaction product including an ethylene-containing polymer having a peak melting temperature;

ii. introducing the ethylene-containing polymer into a device for melting and blending the ethylene-containing polymer;

iii. introducing a propylene based elastomer into the device;

iv. introducing a grafted polyolefin into the device; and

v. melt blending at least the ethylene-containing polymer, the propylene based elastomer, and the grafted polyolefin in the device to form a blend composition;

wherein the ethylene-containing polymer is first heated to a temperature above the peak melting temperature in the device during the step of melt blending.

Example 33. A process comprising the steps of:

i. polymerizing one or more monomers including ethylene in a reactor to form a reaction product including an ethylene-containing polymer having a peak melting temperature;

ii. removing the ethylene-containing polymer from the reactor at a temperature below the peak melting temperature, wherein at least a portion of the ethylene-containing polymer is in a crystalline state;

iii. introducing the ethylene-containing polymer into a device for at least heating the ethylene-containing polymer;

iv. adding a propylene based elastomer into the device;

v. adding a grafted polyolefin into the device;

vi. removing a blend composition including the ethylene-containing polymer, the propylene based elastomer, and the grafted polyolefin from the device; and

vii. crystallizing at least a portion of the ethylene-containing polymer in the blend composition;

wherein the first crystallization of the portion of the ethylene-containing polymer after being removed from the reactor is the crystallization of the portion in the blend composition.

Example 34. A process comprising the steps of:

melt compounding a plurality of polymers including:

i) an ethylene-containing polymer;
ii) a propylene based elastomer; and
iii) a grafted polyolefin;

to form a blend composition; and

forming the blend composition into pellets or other particles of suitable size for introducing into a screw and barrel assembly of a polymer extruder;

wherein the ethylene-containing polymer, the propylene based elastomer, and the grafted polyolefin are selected so that the resulting blend composition has a melt flow rate from about 0.5 to about 5 g/10 min as measured according to ISO 1133 at 190 °C / 2.16 kg.

Example 35. The process of any of examples 32 through 34, wherein the ethylene-containing polymer includes from about 60 weight percent to about 100 weight percent (preferably from about 75 weight percent to about 100 weight percent) ethylene, and has a melt flow rate from about 0.1 to about 100 g/10 min (preferably from about 0.5 to about 10 g/10 min) as measured according to ISO 1133 at 190 °C / 2.16 kg.

Example 36. The process of any of examples 32 through 35, wherein

i) the blend composition includes from about 30 weight percent to about 85 weight percent of the ethylene-containing polymer; or

ii) the blend composition includes from about 10 weight percent to about 50 weight percent of the propylene based elastomer; or

iii) the blend composition includes from about 3 weight percent to about 40 weight percent of the grafted polyolefin; or

iv) any combination of i), ii) and iii).

Example 37. The process of any of examples 32 through 36, wherein

i) the grafted polyolefin includes maleic anhydride or maleic acid grafted on a polyethylene (i.e., a polyethylene homopolymer or a polyethylene copolymer including about 60 weight percent or more ethylene); or

ii) .the grafted polyolefin has a melt flow rate of about 0.2 to about 80 g/10 min as measured according to ISO 1133 at 190 °C / 2.16 kg; or

iii) both i) and ii).

Example 38. The process of any of examples 32 through 37, wherein the propylene based elastomer has a crystallinity of about 0 percent to about 20 percent; and includes from about 75 to about 95 weight percent propylene.

Example 39. The process of any of examples 32 through 38, wherein

i) the step of polymerizing the ethylene-containing polymer includes a gas phase polymerization, wherein ethylene monomer is in a gas phase during the polymerization (e.g., using a fluidized bed reactor); or

ii) the process includes a step of separating the reaction product of a fluidized bed reactor from one or more unreacted monomers including ethylene, wherein the reaction product is in the form of a powder; or

iii) the process includes polymerizing the ethylene-containing polymer using a catalyst, wherein the catalyst is a metallocene catalyst or a single site catalyst; or

iv) any combination of i), ii) and iii).

Example 40. The process of any of examples 32 through 39, wherein the device includes a screw and barrel assembly, wherein the screw and barrel assembly provides shear energy to the ethylene-containing polymer and the propylene based elastomer by the rotation of the screw and/or at least a portion of the barrel assembly is heated for providing thermal energy to the ethylene-containing polymer and the propylene based elastomer.

Example 41. The process of any of examples 32 through 40, wherein the process includes heating the propylene based elastomer and the ethylene-containing polymer to a temperature above the melting temperature of the ethylene-containing polymer and melt mixing in the device for forming the blend composition, (preferably wherein the step of heating includes heating to a temperature of about 130 °C or more, more preferably about 160 °C or more), preferably wherein the process includes a step of cooling the blend composition to a temperature of about 70 °C or less, preferably .the process includes packaging the blend composition and/or shipping the blend composition, wherein the blend composition is in the form of pellets or other particles.

Example 42. The process of any of examples 32 through 41, wherein the process includes removing a volatile material from the ethylene-containing polymer.

Example 43. The process of any of examples 32 through 42 wherein the total amount of the ethylene-containing polymer, the propylene based elastomer, and the grafted polyolefin is from about 80 weight percent to about 100 weight percent of the blend composition.

Example 44. The process of any of examples 32 through 43, wherein the process includes extruding a film including a layer comprising the blend composition (preferably the layer is interposed between and in contact with a polyolefin layer and with a barrier layer).

Example 45. The process of any of examples 32 through 44, wherein

i) the first heating of the ethylene-containing polymer to a temperature of about 20°C or more (preferably about 40 °C or more) above the peak melting temperature of the ethylene-containing polymer is in the melt blending step; or

ii) the first cooling of the ethylene-containing copolymer from a temperature above the peak melting temperature to a temperature of at least about 20 °C (preferably at least about 40 °C) below the peak melting occurs in the step of cooling.

Example 46. The process of any of examples 32 through 45, wherein the process is an in-line process.

Example 47. A blend composition prepared by the method of any of examples 32 through 46.

Example 48. The use of a blend composition according to the teachings herein (e.g., a blend composition of example 47) for manufacturing a multi-layered polymer article including a layer comprising the blend composition.

The teachings herein are *inter alia* directed at multi-layer films, tie layer compositions for multi-layer films and related methods, and to polymeric adhesive compositions and methods for manufacturing polymeric adhesive compositions. The tie layer composition preferably adhere to polypropylene, and more preferably adheres to both polyethylene and polypropylene. The tie layer preferably includes a propylene based elastomer. The tie layer includes one or more thermoplastic polyolefins. The tie layer composition may include a grafted polyolefin, e.g., having one or more functional grafts. The polymeric adhesive compositions preferably adhere to both polypropylene surfaces and to polyethylene surfaces. The polymeric adhesive composition preferably comprises a minority amount (i.e., less than about 40 weight percent) of a propylene based elastomer polymer and a majority amount (i.e., greater than about 55 weight percent) of an ethylene containing polymer. Preferred methods for manufacturing the polymeric adhesive composition avoids thermal processing (e.g., a cycle of heating above the melting temperature and cooling below the crystallization temperature) of at least a portion (or even all) of the ethylene containing polymer after removing from a polymerization reactor and before compounding with the propylene based elastomer.

**Claims**

1. A film comprising:

    a first layer including about 60 weight percent or more of one or more polyethylene resins;
    a second layer including about 60 polymeric weight percent or more of one or more polypropylene resins;
    a tie layer between and in direct contact with the first layer and the second layer, wherein the tie layer includes:

        about 40 weight percent or more of a polyethylene; and
        10 weight percent or more of a propylene based elastomer having a crystallinity from about 2 percent to about 25 percent, wherein the propylene based elastomer is a random copolymer;

    wherein the film has a total thickness of about 800 $\mu$m or less, and the thickness of the tie layer is about 20 percent or less of the total thickness.

2. The film of claim 1, wherein the first layer consists entirely of one or more polyethylene resins and/or the second layer consists entirely of one or more polypropylene resins.

3. The film of any of claims 1 or 2, wherein the polyethylene resin is a low density polyethylene, a linear low density polyethylene, a high density polyethylene, or copolymer of ethylene and a polar comonomer, preferably wherein the copolymer has an ethylene concentration of about 70 weight percent to about 95 weight percent, optionally wherein the copolymer is an ethylene vinyl acetate copolymer.

4. The film of any of claims 1 through 3, wherein the propylene based elastomer has a propylene concentration of about 80 to about 94 weight percent, based on the total weight of the propylene based elastomer; preferably wherein the second layer includes, consists substantially of, or consists entirely of one or more isotactic polypropylene homopolymers, one or more random polypropylene copolymers having a crystallinity of about 30 percent or more, or one or more impact polypropylene copolymers.

5. The film of any of claims 1 through 4, wherein the tie layer is substantially free of, or entirely free of any grafted polymer,
    preferably wherein the tie layer consists entirely of the propylene based elastomer, the polyethylene, and optionally a polypropylene;
    wherein the polypropylene is a polypropylene homopolymer, a random polypropylene copolymer having a crystallinity of about 30 percent or more, or a polypropylene impact copolymer.

6. A method comprising the steps of:

    extruding a first multi-layered article including a tie layer of an adhesive composition adhered to a polyolefin layer including a first polyolefin using an extruder;
    extruding a second multi-layered article including a tie layer of the same adhesive composition adhered to a polyolefin layer including a second polyolefin using the same extruder;
    wherein the first polyolefin is one of a polypropylene resin or a polyethylene resin and the second polyolefin is the other;
    wherein the adhesive composition includes 40 weight percent or more of a polyethylene and 10 weight percent or more of a propylene based elastomer, wherein the propylene based elastomer is a random copolymer having a crystallinity from 2 to 25 percent, and a propylene concentration of 75 weight percent or more;
    optionally, wherein the film has a total thickness of about 2000 $\mu$m or less.

7. The method of claim 6, wherein in the first multi-layered article and the second multi-layered article are films having three or more layers.

8. The method of claim 7, wherein each of the films has a total thickness of 800 $\mu$m or less, preferably 200 $\mu$m or less, and more preferably 50 $\mu$m or less.

9. The method of any of claims 6 to 8, wherein the thickness of the tie layer is 20 percent or less of the total thickness.

10. The method any of claims 6 to 9, wherein the polyolefin layer of the first multi-layered article includes 60 weight percent or more of the first polyolefin, and the second multi-layered article includes 60 weight percent or more of the second polyolefin.

11. The method of any of claims 6 through 10, wherein the random copolymer has a B-index of 0.75 to 1.25.

**12.** The method of any of claims 6 through 11, wherein the first and second multi-layered films include a barrier layer, wherein the tie layer adheres to the barrier layer.

**13.** The method of claim 12, wherein the adhesive composition includes 0.1 to 20 weight percent of a grafted polyolefin having a functional graft comprising one or more oxygen atoms.

**14.** The method of any of claims 6 through 13, wherein the polyethylene resin is a low density polyethylene, a linear low density polyethylene, a high density polyethylene, or a copolymer of ethylene and a polar comonomer, preferably wherein the copolymer includes 70 to 95 weight percent ethylene, optionally wherein the polar comonomer is ethylene vinyl acetate.

**15.** The method of any of claims 6 through 14, wherein the adhesive composition includes 10 to 34 weight percent of the propylene based elastomer, preferably wherein the first multi-layered article includes a barrier layer, wherein the tie layer is a first tie layer adhered to first polyolefin layer and a first surface of the barrier layer, and the article includes a second tie layer adhered to a second surface of the barrier layer, wherein the first tie layer and the second tie layer are formed from the same adhesive composition.

10

12

14

16

FIG. 1

23

10

12

24

21

14

22

25

16

FIG. 2

26

10'

12

14

16

14

FIG. 3

12

20

12

14'

18

14'

FIG. 4

12

20

12
14'
18
14'
16

FIG. 5

40

46
42
44

(A)

40'

46
42
44'

(B)

FIG. 6

110

| | 103 | | 117 | |
|:-:|:-:|:-:|:-:|:-:|
| 102 | → | 106 | → | 118 / 119 |

104

FIG. 7

120

| | 113 | | 125 | |
|:-:|:-:|:-:|:-:|:-:|
| 112 | → | 124 | → | 119 / 126 |

122 or 122'

FIG. 8

130

| | 113 | | 125 | |
|:-:|:-:|:-:|:-:|:-:|
| 112 | → | 134 | → | 119/126 |

114    115

FIG. 9

140

114 →
115 →   142   → 122

FIG. 10A

146

114 →
115 →   148   → 122'

FIG. 10B

FIG. 11

FIG. 12

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

Application Number

EP 20 17 4506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 578 396 A1 (OTSUKA PHARMA CO LTD [JP]) 10 April 2013 (2013-04-10) * examples 1-9 * ----- | 1-15 | INV. C08L23/04 C09J123/06 C09J123/16 C09J123/26 |

TECHNICAL FIELDS
SEARCHED     (IPC)

C08L
C09J

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 19 November 2020 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................................
& : member of the same patent family, corresponding
document

EPO FORM 1503 03.82 (P04E07)

Europäisches
Patentamt

European
Patent Office

Office européen
des brevets

**INCOMPLETE SEARCH
SHEET C**

Application Number

EP 20 17 4506

Claim(s) completely searchable:
-

Claim(s) searched incompletely:
1-15

Reason for the limitation of the search:

Independent claims 1 and 6 as file in the regional phase do not comprise
the same essential features :
- claim 6 is limited to propylene based elastomer having a propylene
concentration of 75 weight percent or more
- claim 1 is limited to films having a total thickness of about 800 ?m or
less and the tie layer is 20 percent or less of the total thickness.

## ANNEX TO THE EUROPEAN SEARCH REPORT
## ON EUROPEAN PATENT APPLICATION NO.

EP 20 17 4506

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2020

| Patent document cited in search report | | Publication date | Patent family member(s) | Publication date |
|---|---|---|---|---|
| EP 2578396 | A1 | 10-04-2013 | AU 2011260914 A1 | 10-01-2013 |
| | | | BR 112012030639 A2 | 13-06-2017 |
| | | | CA 2801202 A1 | 08-12-2011 |
| | | | CN 103038062 A | 10-04-2013 |
| | | | EP 2578396 A1 | 10-04-2013 |
| | | | JP 5709142 B2 | 30-04-2015 |
| | | | JP WO2011152387 A1 | 01-08-2013 |
| | | | KR 20130089163 A | 09-08-2013 |
| | | | MX 346133 B | 08-03-2017 |
| | | | NZ 604224 A | 30-05-2014 |
| | | | RU 2012156091 A | 20-07-2014 |
| | | | TW 201210821 A | 16-03-2012 |
| | | | US 2013071587 A1 | 21-03-2013 |
| | | | WO 2011152387 A1 | 08-12-2011 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62345341
- US 62352125
- US 7064163 B2
- US 7700702 B2
- US 8071687 B2
- US 8637159 B2
- US 20040249046 A1
- US 20100276057 A1
- US 20110217497 A1

### Non-patent literature cited in the description

- **R. MCEVOY et al.** *Macromolecules,* 1996, vol. 29 (12), 4258-4266
- **E. NOLLEY et al.** *Polymer Engineering & Science,* 1980, vol. 20 (5), 364-369
- Macromolecular Physics. **B. WUNDERLICH.** Crystal Melting. Academic Press, 1980, vol. 3, 48
- **F. RODRIGUEZ.** Principles of Polymer Systems. Hemisphere Publishing Corporation, 1982, 54